# EUROPEAN PATENT APPLICATION

(11) **EP 1 465 272 A2**
(43) Date of publication of application: **06.10.2004**
(21) Application number: 04007988.1
(22) Date of filing: 01.04.2004
(51) Int. Cl.: H01M 8/02

(54) **Sealing structure for a fuel cell**

(30) Priority: 02.04.2003 JP 2003099031
(71) Applicant: MATSUSHITA ELECTRIC INDUSTRIAL CO., LTD., Kadoma-shi, Osaka 571-8501 (JP)
(72) Inventor: Kobayashi, Susumu, Ikoma-shi Nara 630-0134 (JP); Matsumoto, Toshihiro, Takatsuki-shi Osaka 569-1144 (JP); Tomizawa, Takeshi, Ikoma-shi Nara 630-0123 (JP); Kokawa, Katsuzou, Uda-gun Nara 633-0254 (JP); Kanbara, Teruhisa, Toyonaka-shi Osaka 560-0056 (JP)
(74) Representative: Schirdewahn, Jürgen

(57) **Abstract**

The present invention relates to a sealing structure for a fuel cell, including sealing structures of sub-portions of a fuel cell, which may be pre-fabricated and stacks composed of a plurality of fuel cells to reliably and easily seal between separators as well as between a separator and polymer electrolyte membranes, a fuel cell electrolyte membrane-electrode assembly structure, and a fuel cell.

## Description

### Technical Field

The present invention relates to a sealing structure for a fuel cell, including sealing structures of sub-portions of a fuel cell will may be pre-fabricated and stacks composed of a plurality of fuel cells.

Particularly the following structures are concerned:
- "fuel cell electrolyte membrane structure,"
- -a "fuel cell electrolyte membrane-electrode assembly structure," and
- -a "fuel cell."

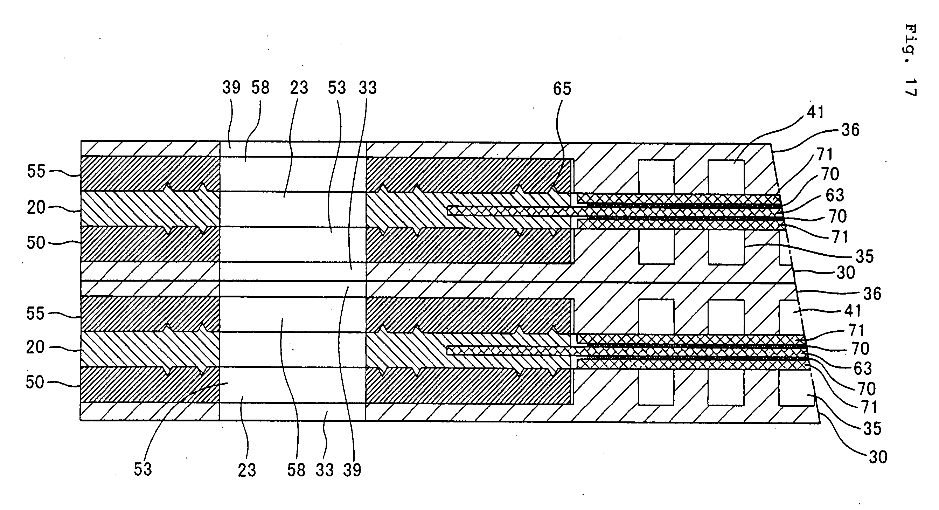

Here a "fuel cell electrolyte membrane structure" means one that combines an electrolyte membrane for a fuel cell and a frame (20 in Figure 17), and "fuel cell electrolyte membrane-electrode assembly structure" means one that combines an MEA (i.e., an electrolyte membrane-electrode assembly structure) and a frame.

The present invention more particularly relates to an electrolyte membrane-electrode assembly in which a fuel cell electrolyte m to a fuel cell electrolyte membrane structure having an improved seal structure distributed around the periphery of the fuel cell electrolyte membrane, a fuel cell electrolyte membrane-electrode assembly structure, and a fuel cell equipped with this fuel cell electrolyte membrane-electrode assembly structure.

### Background Art

The basic principle of a polymer electrolyte fuel cell is that one side of an ion-exchange membrane (i.e., a polymer electrolyte membrane) is exposed to fuel gas and the other side is exposed to an oxidant gas (e.g., air), and water is synthesized by the chemical reaction across the ion-exchange membrane, thereby electrically generating reaction energy.

The basic power-generation element of such a fuel cell is composed of the polymer electrolyte membrane that selectively transports hydrogen ions, a pair of catalyst layers (anode catalyst layer and cathode catalyst layer) composed principally of carbon powder that supports a platinum-group metal catalyst, and a gas diffusion electrode that is positioned so as to be enclosed by this pair of catalyst layers, that combines air permeability and electron conductivity, and that consists principally of carbon fiber. This basic power-generation element is called an MEA (membrane-electrode assembly). To prevent the fuel gas and oxidant gas supplied to the electrode from leaking out and to prevent the mixture of these two kinds of gases, a gasket is disposed around the electrode so as to enclose the polymer electrolyte membrane. This gasket and MEA are integrated by means of a usual thermocompression method.

Regarding the basic structure of such a fuel cell, it is configured such that the gasket and MEA are enclosed by an anode separator in which the fuel gas channel is provided and a cathode separator in which the air gas channel is provided.

Usually provided in each separator are a pair (in some cases, multiple pairs) of through-holes (i.e., a manifold) such that the fuel gas, oxidant gas, and cooling water are distributed to each separator and the branch ends are connected directly to separator plate grooves. In this structure, in the case of fuel gas, for example, branching is from the fuel gas supply manifold to the fuel gas flow channel of the anode separator, and the fuel gas is consumed by the cell reaction in the MEA, as it flows through the fuel gas flow channel. The excess fuel gas at this time is disposed of in the fuel gas discharge manifold. This also applies to the oxidant gas.

The fuel cell generates heat as is generates power, so to maintain the cell at a satisfactory temperature, it is necessary to cool it with cooling water, etc. For this purpose, a cooling block normally is created by providing a cooling water flow channel behind the separator, for every 1-3 cells. The MEA, separator plate, and cooling block are laminated alternately, and this laminate is enclosed between end plates, via the collector plates and insulating plates, after which fastening bolts are used to fasten from both ends, thereby yielding the general laminated fuel cell structure. This laminated fuel cell usually is called simply a stack.

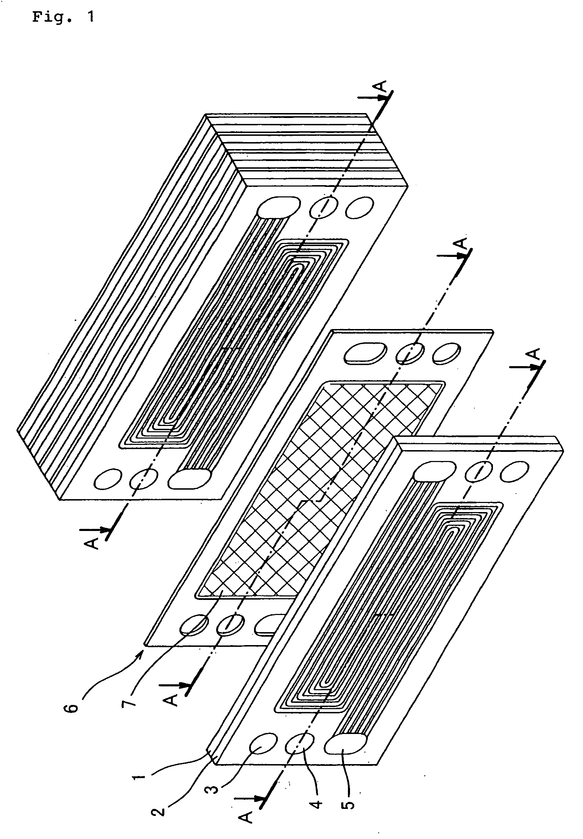

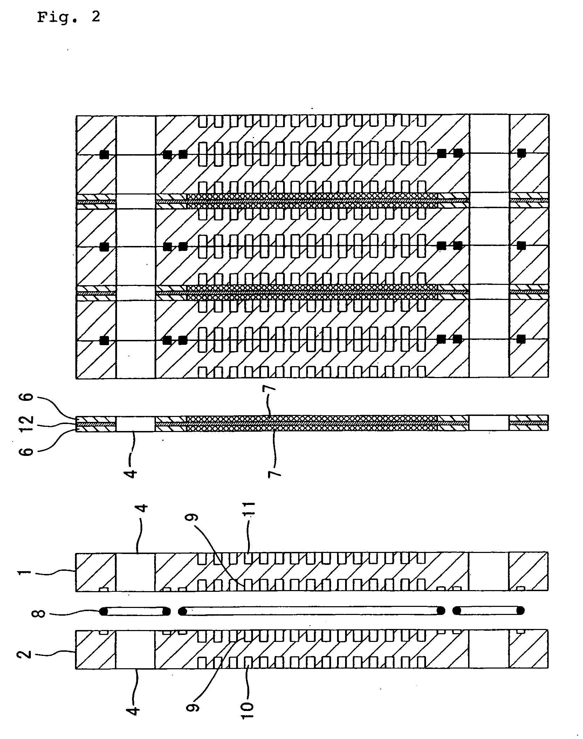

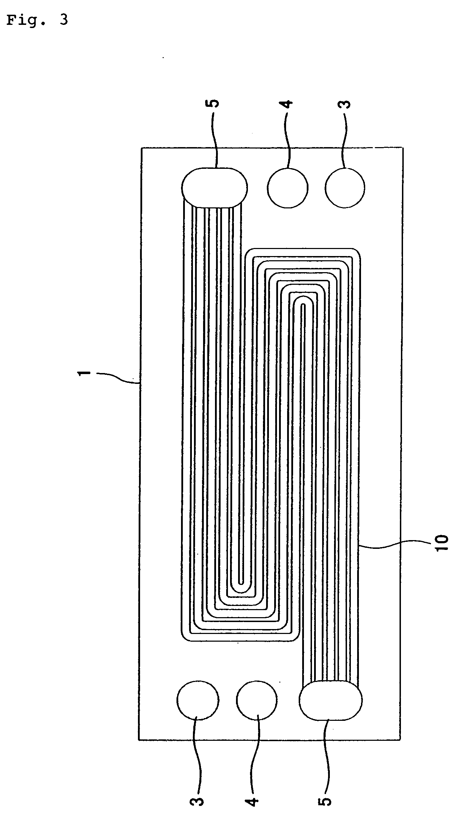

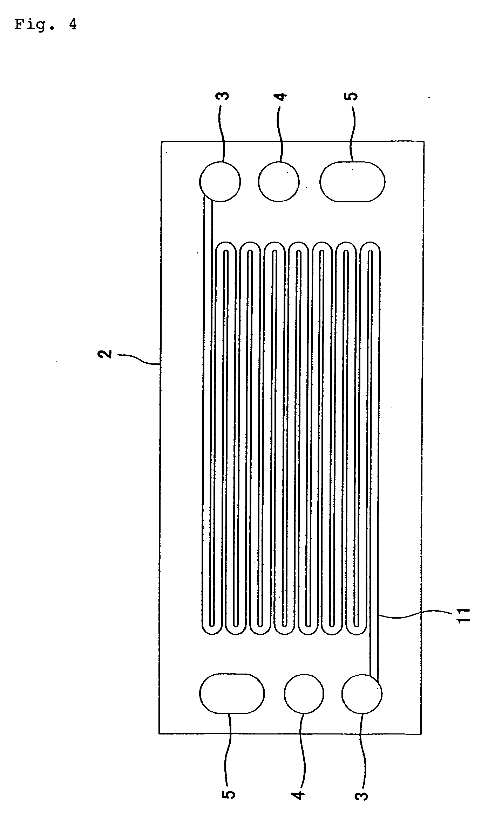

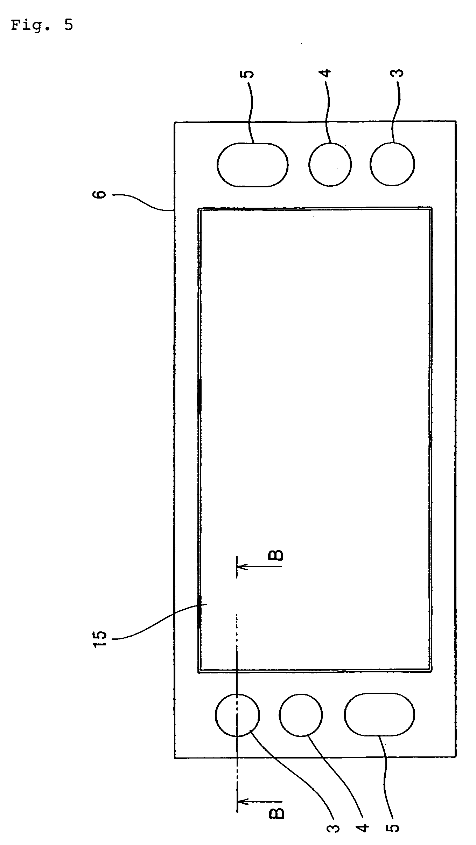

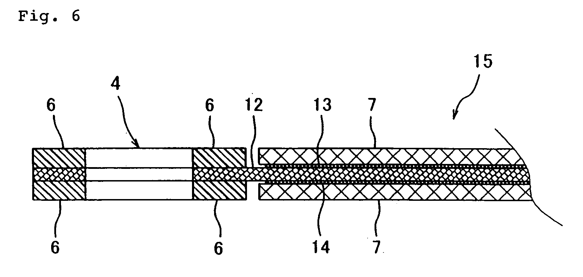

Figure 1 is an oblique view showing the conventional stack structure. Figure 2 is the view along line A-A in Figure 1. In Figures 1 and 2, the laminate structure of the stack is partially exploded for convenience of explanation. Also, Figure 3 is the top view showing one example of the air flow channel pattern of the cathode separator with which a conventional stack is equipped, and Figure 4 is the top view that similarly shows one example of the hydrogen flow channel pattern of the anode separator. Furthermore, Figure 5 is the top view showing the structure of the MEA and gasket appropriate for the cathode separator shown in Figure 3 and the anode separator shown in Figure 4. Figure 6 is the view along line B-B in Figure 5.

As shown in Figures 1 and 2, hydrogen manifold 3, water manifold 4, and air manifold 5 are formed at both ends of rectangular anode separator 1 and cathode separator 2. This anode separator 1 and cathode separator 2 are crimped or crimped via O-ring (i.e., water-cooled surface seal member) 8. Cooling water flow channel 9 is formed both on the side of anode separator 1 that contacts cathode separator 2 and on the side of cathode separator 2 that contacts anode separator 1. Also, air flow channel 10 is formed on the side of anode separator 1 away from cathode separator 2, and hydrogen flow channel 11 is formed on the side of cathode separator 2 away from anode separator 1. Furthermore, an example of the pattern of air flow channel 10 and an example of the pattern of hydrogen flow channel 11 are shown in Figures 3 and 4, respectively.

With reference to both Figures 5 and 6, MEA 15 which is composed of ion-exchange membrane 12, anode catalyst layer 13 and cathode catalyst layer 14 formed on both sides of this ion-exchange membrane 12, and gas diffusion electrodes 7 provided so as to enclose this anode catalyst layer 13 and cathode catalyst layer 14 is disposed between the laminate made up of anode separator 1 and cathode separator 2 composed as aforementioned. Also, gasket 6 is provided at the periphery of gas diffusion electrode 7, so as to enclose the periphery of ion-exchange membrane 12, thereby preventing the hydrogen and air supplied to gas diffusion electrode 7 from leaking and preventing their mixture. As aforementioned, this MEA 15 and gasket 6 are integrated by means of a thermocompression method.

An important problem with the gas seal in a fuel cell such as the aforementioned is the occurrence of the cross-leak phenomenon (i.e., the mixture of fuel gas and oxidant gas as the result of an incomplete seal). This phenomenon is related closely to the seal structure of the fuel cell. As shown in Figures 3 and 4, this relationship is evident in the configuration disclosed for example in the Publication of Examined Japanese Patent Application No. 2711018 where the flow channel is connected directly to the manifold. In this case, as is evident from the structure, the gasket positioned at the periphery of the MEA is supported only by the separator on one side in this flow channel part. Consequently, in the vicinity of the gas manifold, two leak paths occur as the result of the drooping of the gasket toward the flow channel side of the electrically conductive separator plate. One is the leak path that results when the gasket that forms a cantilever structure flexes into the flow channel of the separator, and as a result a gap forms between it and the opposing separator plate, resulting in a leak path. The other is the leak path produced as follows: Although the gasket normally is formed by sticking it to the electrolyte membrane, the electrolyte membrane usually is a modified fluoropolymer, so the bonding strength of the two is very weak. As aforementioned, therefore, when the gasket deforms, the electrolyte membrane and the gasket separate.

This cross-leak is extremely detrimental to the function of the fuel cell. For example, the aforementioned leak path that occurs in the vicinity of the manifold of one cell is believed to cause the fuel gas to leak into the oxidant gas manifold. In this case, in the fuel cell structure, the gas manifold is common to all cells, so the oxidant gas supplied to all cells will contain fuel gas. As a result, not only will the electric potential drop considerably in all cells, but also the fuel gas normally consumed by the cell reaction will combust catalytically with the oxidant gas on the air electrode side, thereby damaging the polymer electrolyte membranes. As a result, in the cell with the most severely damaged electrolyte membrane, both electrode gases ultimately will pass through the membrane and intermix, which can lead to the breakdown of the cell.

For this reason, various cross-leak prevention methods have been devised to date, but most have been contrivances related to the separator-side shape (See Publication of Unexamined Japanese Patent Application No. 2002-203578, for example).

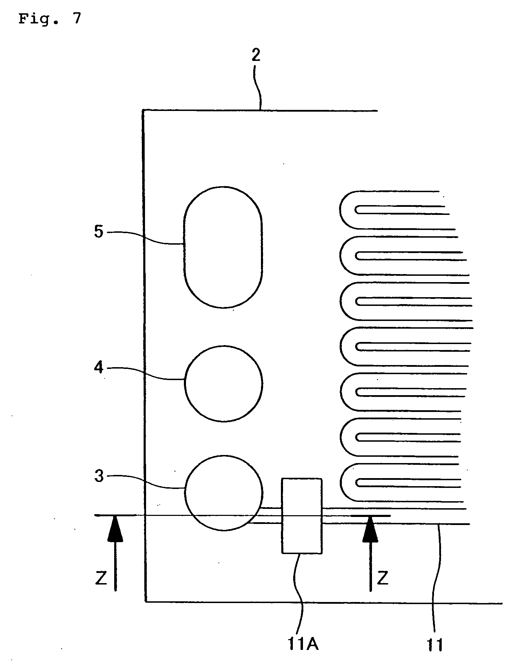

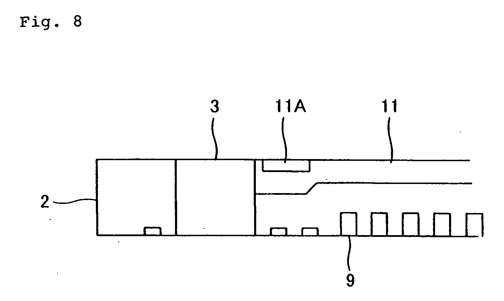

Figure 7 is the top view showing a part of the structure of a conventional cathode separator contrived in this manner. Figure 8 is the view along line Z-Z in Figure 7. As shown in Figures 7 and 8, in the most convenient and, therefore, generally used construction method, the gasket is supported by providing mounted bridge member 11A, which is a separate piece, in hydrogen flow channel 11 in the vicinity of hydrogen manifold 3 of cathode separator 2.

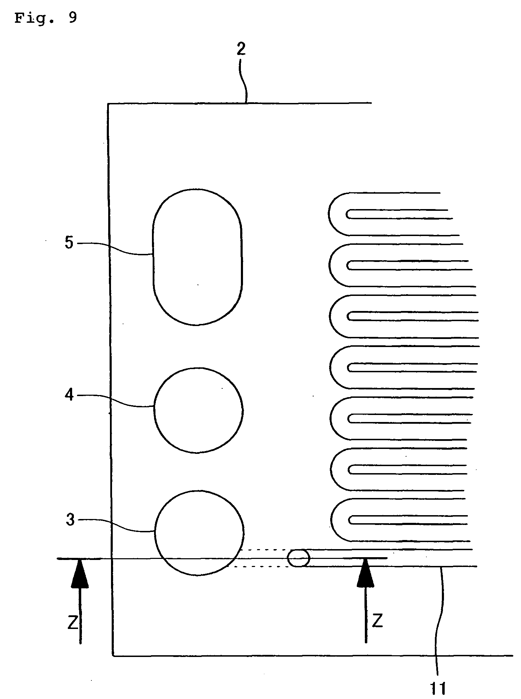

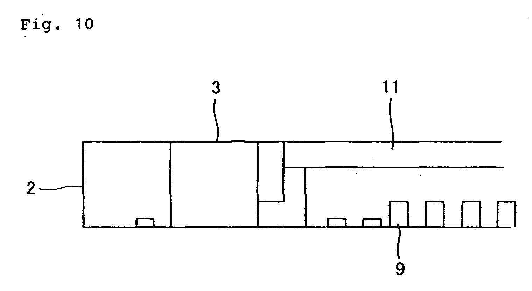

A similar concept which is known form the Publication of Unexamined Japanese Patent Application No. 2002-83614 is the so-called submarine method, by means of which, as shown in Figures 9 and 10, for example, the entire gasket is supported in the vicinity of the manifold by creating the gas flow channel from behind each cell by using the separator water-cooled surfaces.

Also, there have been many proposals for preventing cross-leakage by using a single-material gasket seal structure. (See Published Japanese Translation of PCT Application No. 7-501417, the Publication of Unexamined Patent Application No. 8-45517, and the Published Japanese Translation of PCT Application No. 8-507403 for example.)

However, in the construction method explained with reference to Figures 7 and 8, this process is required at two locations on the fuel gas side and the oxidant gas side, for each cell. Consequently, in a polymer electrolyte fuel cell that requires the lamination of several hundred cells, the method is inapplicable as a mass-production construction method, from the standpoint of assembly precision or assembly complexity itself.

Also, the aforementioned submarine method is an exceedingly superior structure from the standpoint of cross-leak elimination. Because of the laminate structure of the stack, however, a problem exists: One cooling surface per cell is inevitably required, thereby increasing the volume (which decreases the volume power density). Also, it is technically difficult to form a separator with a shape that has small through-holes such as those shown in the figures, resulting in a problem: It is impossible to use an inexpensive molded separator, making it difficult to reduce costs.

Consequently, when the separator with the most common shape is used, the gasket itself must combine rigidity that prevents flexure and sufficient elasticity as a seal member. However, there are problems: A material with superior sealability and high elasticity has poor rigidity, so the aforementioned drooping problem is not solved, and the mechanical strength is low, so creeping occurs readily. By contrast, a material with superior dimensional precision or mechanical properties can hardly be expected to exhibit sealability. That is, the gasket seal structure based on a single material such as the aforementioned has a problem: There are considerable material restrictions in order to satisfy the two contradictory properties, so its practical implementation is difficult.

From the JP 63021763 A it is already known to use a frame in which the periphery of the membrane is enclosed for mounting and sealing purposes. This frame is interposed between mounting frames of the elctrodes. The bending elastic module of the membrane frame is rather low, i.e. about 30 Mpa. In a similar structure shown in the US 6 316 139 B1 such a membrane frame is provided with a further layer of adhasive. In the JP 11154522 A it is recommended for a similar structure to use an even softer membrane frame having an elastic module of not more than 10 Mpa.

The JP 2000182639 A (DE 199 60 516 A1) already discloses to fix the periphery of the membrane to the separators by a sealing sheet each composed of two layers of different elasticity. This sheets however do not form a frame gripping around the periphery of the membrane.

### Object of the Invention

The purpose of the present invention, which takes these problems into consideration, is to provide a fuel cell electrolyte membrane structure that can reliably and easily seal between separators as well as between a separator and a fuel cell electrolyte membrane, a fuel cell electrolyte membrane-electrode assembly structure, and a fuel cell equipped with this fuel cell electrolyte membrane-electrode assembly structure.

### Means for Solving the Problems

Those problems are solved generally by the features of claim 1. The sublaims show preferred embodiments.

To solve the aforementioned problems more particularily, the fuel cell electrolyte membrane structure of the present invention is equipped with a fuel cell electrolyte membrane that is enclosed by a pair of electrode layers, thereby forming an electrolyte membrane-electrode assembly for a fuel cell, and is equipped with a frame that encloses and holds so as to cover the periphery of the aforementioned fuel cell electrolyte membrane and that has a modulus of elasticity of at least 2000 MPa and at most 2,000,000 MPa; and is configured such that the aforementioned electrolyte membrane-electrode assembly for a fuel cell is enclosed and held by a pair of separators having gas flow channels, and an elastic body with a modulus of elasticity greater than 0 MPa and less than or equal to 200 MPa is disposed between the aforementioned frame and the aforementioned pair of separators, thereby sealing between the aforementioned fuel cell electrolyte membrane and the aforementioned pair of separators as well as between the aforementioned pair of separators.

Also, the fuel cell electrolyte membrane-electrode assembly structure of the present invention is equipped with an electrolyte membrane-electrode assembly for a fuel cell configured such that the fuel cell electrolyte membrane is enclosed by a pair of electrode layers, and the aforementioned electrolyte membrane-electrode assembly for a fuel cell is enclosed and held by a pair of separators having gas flow channels, and is equipped with a frame that encloses and holds so as to cover the periphery of the aforementioned fuel cell electrolyte membrane and that has a modulus of elasticity of at least 2000 MPa and at most 2,000,000 MPa; and is configured such that an elastic body with a modulus of elasticity greater than 0 MPa and less than or equal to 200 MPa is disposed between the aforementioned frame and the aforementioned pair of separators, thereby sealing between the aforementioned fuel cell electrolyte membrane and the aforementioned pair of separators as well as between the aforementioned pair of separators.

Also, the fuel cell electrolyte membrane-electrode assembly structure of the present invention is equipped with an electrolyte membrane-electrode assembly for a fuel cell configured such that the fuel cell electrolyte membrane is enclosed by a pair of electrode layers and is enclosed and held by a pair of separators having gas flow channels, and is equipped with a frame that encloses and holds so as to cover the periphery of the aforementioned fuel cell electrolyte membrane and that has a modulus of elasticity of at least 2000 MPa and at most 2,000,000 MPa; and is configured such that an elastic body with a modulus of elasticity greater than 0 MPa and less than or equal to 200 MPa is provided in the aforementioned frame, and the aforementioned frame and the aforementioned elastic body seal between the aforementioned fuel cell electrolyte membrane and the aforementioned pair of separators as well as between the aforementioned pair of separators.

In the fuel cell electrolyte membrane-electrode assembly structure of the aforementioned invention, the aforementioned frame and the aforementioned elastic body preferably are integrated.

Also, in the fuel cell electrolyte membrane-electrode assembly structure of the aforementioned invention, the aforementioned frame and the aforementioned elastic body preferably are fused.

Also, in the fuel cell electrolyte membrane-electrode assembly structure of the aforementioned invention, the aforementioned elastic body preferably is disposed so as to cover the entire surface of the aforementioned frame.

Also, in the fuel cell electrolyte membrane-electrode assembly structure of the aforementioned invention, the aforementioned frame preferably is anchored by the aforementioned elastic body.

Also, in the fuel cell electrolyte membrane-electrode assembly structure of the aforementioned invention, it is preferable that at least one undercut is provided on the aforementioned frame and that the relevant undercut is filled with the aforementioned elastic body.

Also, the fuel cell of the present invention is characterized in that,
in a fuel cell that is equipped with a fuel cell electrolyte membrane-electrode assembly in which the fuel cell electrolyte membrane is enclosed between a pair of electrode layers and that is equipped with a pair of separators that enclose and hold the aforementioned fuel cell electrolyte membrane-electrode assembly and that have gas flow channels, and that provides, between the periphery of the aforementioned fuel cell electrolyte membrane-electrode assembly and the aforementioned pair of separators, a seal structure for sealing between the aforementioned fuel cell electrolyte membrane and the aforementioned pair of separators as well as between the aforementioned pair of separators,
the aforementioned seal structure provides a frame that is enclosed and held so as to cover the aforementioned periphery and that has a modulus of elasticity of at least 2000 MPa and at most 2,000,000 MPa, and provides an elastic body that is disposed between the aforementioned frame and the aforementioned pair of separators and that has a modulus of elasticity greater than 0 MPa and less than or equal to 200 MPa.

In the fuel cell of the aforementioned invention, the aforementioned separator and the aforementioned elastic body preferably are integrated.

Also, in the fuel cell of the aforementioned invention, the aforementioned elastic body and the aforementioned frame preferably are integrated.

Also, in the fuel cell of the aforementioned invention, the aforementioned elastic body and the aforementioned frame preferably are fused.

Also, in the fuel cell of the aforementioned invention, the aforementioned elastic body preferably is disposed so as to cover the entire surface of the aforementioned frame.

Also, in the fuel cell of the aforementioned invention, the aforementioned frame preferably is anchored by the aforementioned elastic body.

Also, in the fuel cell of the aforementioned invention, it is preferable that at least one undercut is provided on the aforementioned frame and that the relevant undercut is filled with the aforementioned elastic body.

Also, the fuel cell of the present invention is characterized in that,
in a fuel cell that is equipped with a fuel cell electrolyte membrane-electrode assembly in which the fuel cell electrolyte membrane is enclosed between a pair of electrode layers and that is equipped with a pair of separators that enclose and hold the aforementioned fuel cell electrolyte membrane-electrode assembly and that have gas flow channels, and that is configured, between the periphery of the aforementioned fuel cell electrolyte membrane-electrode assembly and the aforementioned pair of separators, so as to seal between the aforementioned fuel cell electrolyte membrane and the aforementioned pair of separators as well as between the aforementioned pair of separators,
the provided frame encloses and holds so as to cover the aforementioned periphery and has a modulus of elasticity of at least 2000 MPa and at most 2,000,000 MPa, and the relevant frame is enclosed and held by the aforementioned pair of separators, which have a modulus of elasticity greater than 0 MPa and less than or equal to 200 MPa.

Furthermore, the fuel cell of the present invention is characterized in that,
in a fuel cell that is equipped with a fuel cell electrolyte membrane-electrode assembly that encloses the fuel cell electrolyte membrane between a pair of electrode layers and that is equipped with a pair of separators that enclose and hold the aforementioned fuel cell electrolyte membrane-electrode assembly and that have gas flow channels; and that, between the periphery of the aforementioned fuel cell electrolyte membrane-electrode assembly and the aforementioned pair of separators, provides a seal structure for sealing between the aforementioned fuel cell electrolyte membrane and the aforementioned pair of separators as well as between the aforementioned pair of separators,
the aforementioned seal structure is equipped with first and second frames having a modulus of elasticity of at least 2000 MPa and at most 2,000,000 MPa as well as an elastic body having a modulus of elasticity greater than 0 MPa and less than or equal to 200 MPa; the aforementioned elastic body is disposed between the aforementioned first frame and one of the aforementioned separators, between the aforementioned second frame and the other aforementioned separator, and between the aforementioned first frame and the aforementioned second frame; and the elastic body disposed between the aforementioned first frame and the aforementioned second frame encloses and holds so as to cover the aforementioned periphery.

In the aforementioned fuel cell of the present invention, the aforementioned elastic body preferably is disposed so as to cover the entire surfaces of the aforementioned first frame and the aforementioned second frame.

### Effects of the Invention

The present invention's fuel cell electrolyte membrane structure, fuel cell electrolyte membrane-electrode assembly structure, and a fuel cell equipped with this fuel cell electrolyte membrane-electrode assembly structure can seal reliably and easily between separators as well as between a separator and a fuel cell electrolyte membrane.

### Brief Explanation of Drawings

Figure 1 shows an oblique view showing the conventional stack structure.
Figure 2 shows views along line A-A in Figure 1.

Figure 3 shows a top view showing one example of the air flow channel pattern of a cathode separator equipped with a conventional stack.

Figure 4 shows a top view showing one example of the hydrogen flow channel pattern of an anode separator equipped with a conventional stack.

Figure 5 shows a top view showing the structures of the gasket and MEA suitable for the cathode separator shown in Figure 3 and the anode separator shown in Figure 4.

Figure 6 shows a view along line B-B in Figure 5.

Figure 7 shows a top view showing part of the structure of the cathode separator of the conventional example.

Figure 8 shows a view along line Z-Z in Figure 7.

Figure 9 shows a top view showing part of the structure of the cathode separator of the conventional example.

Figure 10 shows a view along line Z-Z in Figure 9.

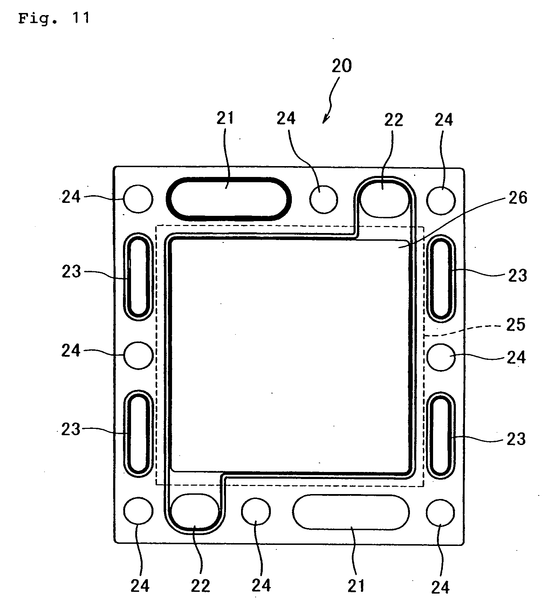

Figure 11 shows a top view showing the structure of the anode-side surface of a frame equipped with the polymer electrolyte fuel cell of Example 1 of the present invention.

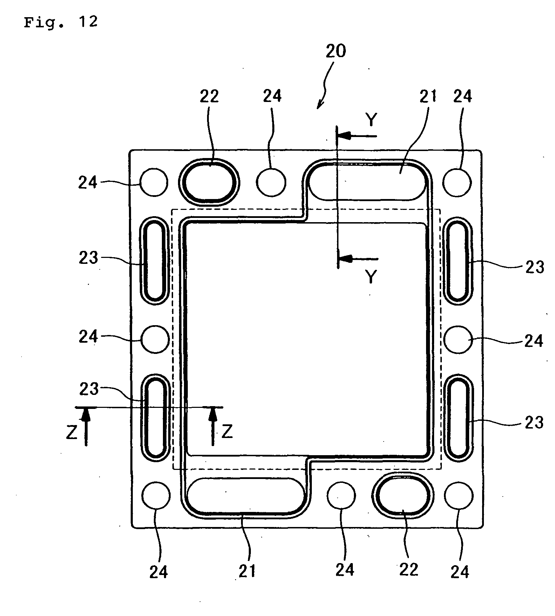

Figure 12 shows a top view showing the structure of the cathode-side surface of a frame equipped with the polymer electrolyte fuel cell of Example 1 of the present invention.

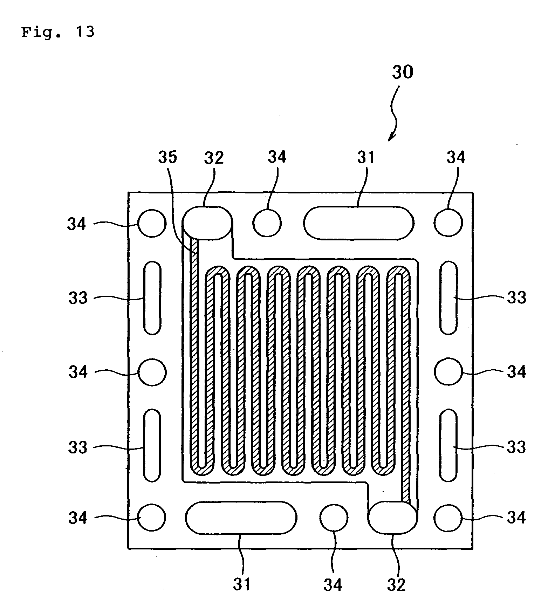

Figure 13 shows a top view showing the structure of the anode separator that is crimped to the anode-side surface of the frame equipped with the polymer electrolyte fuel cell of Example 1 of the present invention.

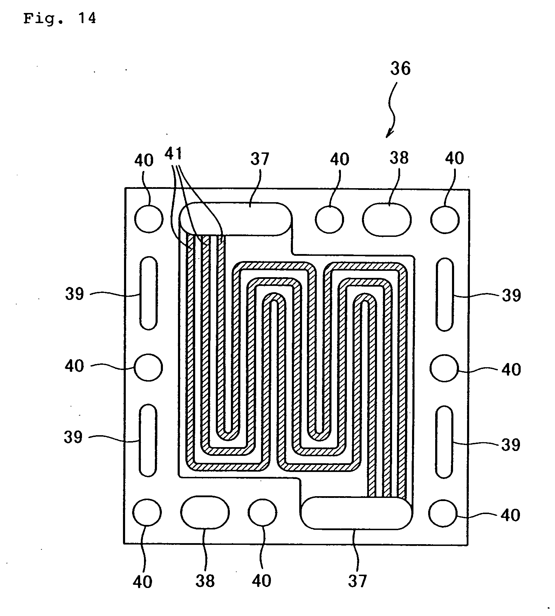

Figure 14 shows a top view showing the structure of the cathode separator that is crimped to the cathode-side surface of the frame equipped with the polymer electrolyte fuel cell of Example 1 of the present invention.

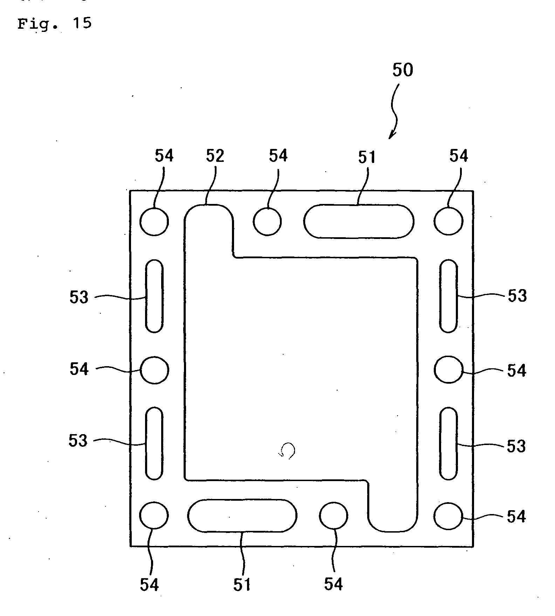

Figure 15 shows a top view showing the structure of the rubber sheet disposed between the anode separator and the frame equipped with the polymer electrolyte fuel cell of Example 1 of the present invention.

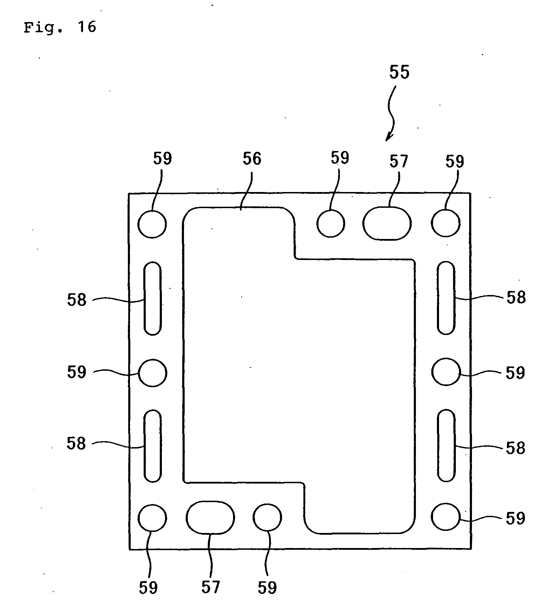

Figure 16 shows a top view showing the structure of the rubber sheet disposed between the cathode separator and the frame equipped with the polymer electrolyte fuel cell of Example 1 of the present invention.

Figure 17 shows a partial cross-sectional view showing the structure in the vicinity of the water manifold of the polymer electrolyte fuel cell of Example 1 of the present invention.

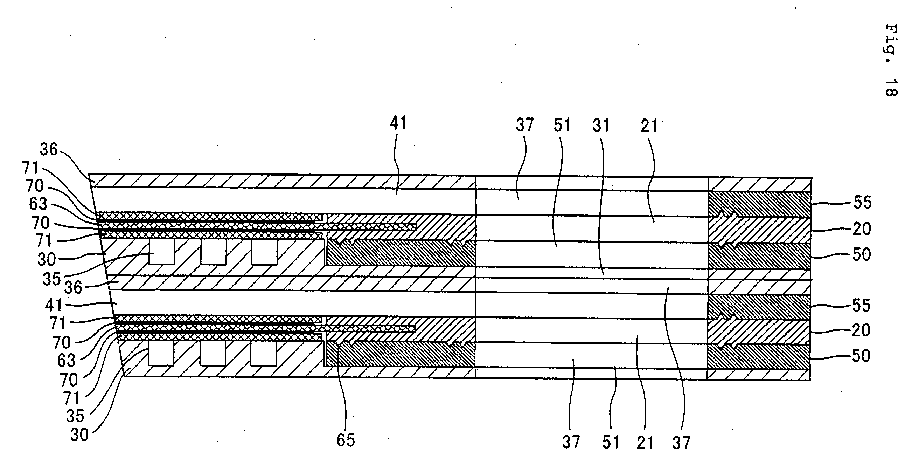

Figure 18 shows a partial cross-sectional view showing the structure in the vicinity of the air manifold of the polymer electrolyte fuel cell of Example 1 of the present invention.

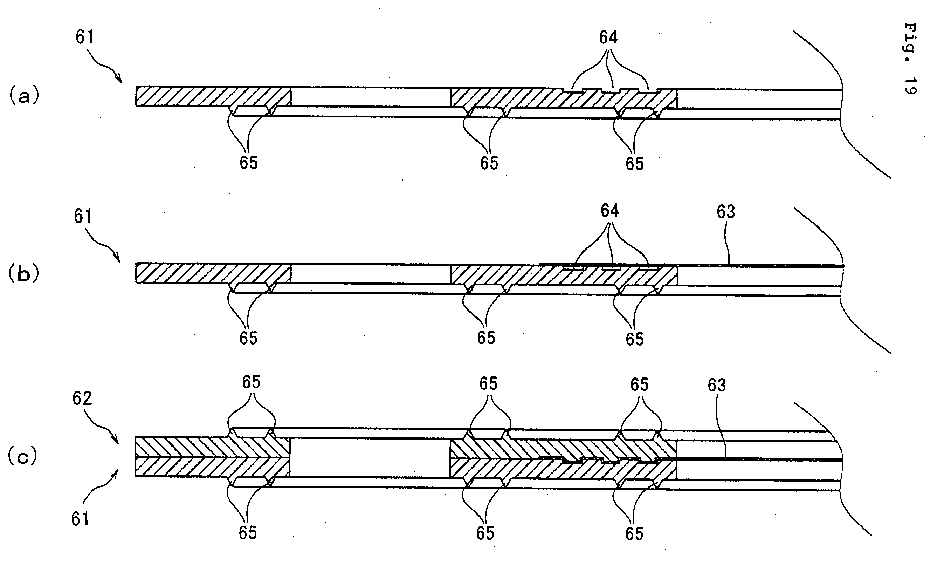

Figure 19 shows a cross-sectional view showing the procedure for manufacturing the frame equipped with the polymer electrolyte fuel cell of Example 1 of the present invention.

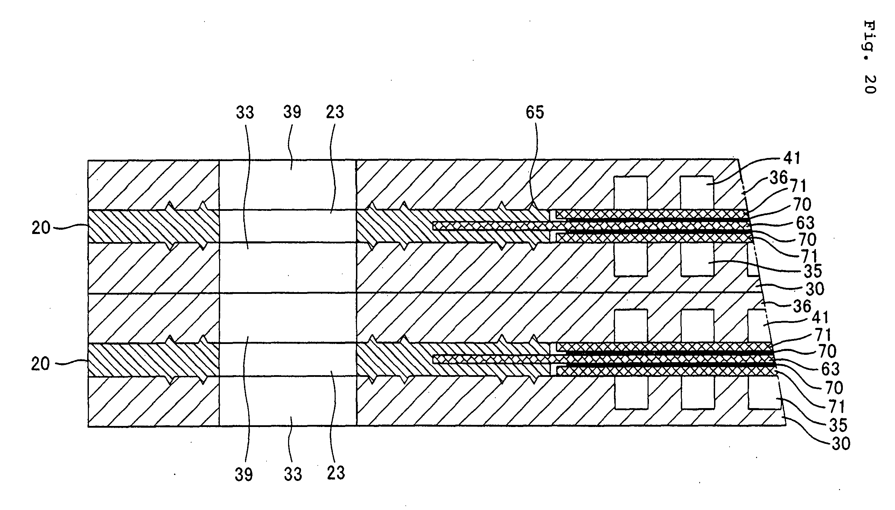

Figure 20 shows a partial cross-sectional view showing the structure in the vicinity of the water manifold of the polymer electrolyte fuel cell of Example 2 of the present invention.

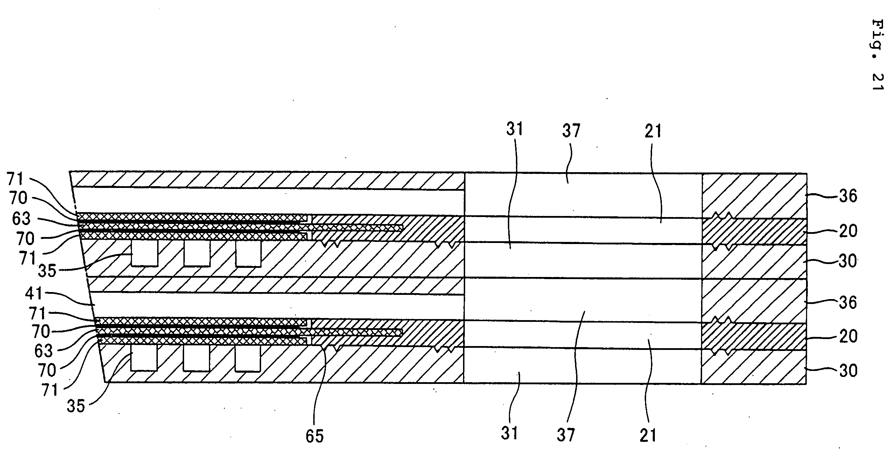

Figure 21 shows a partial cross-sectional view showing the structure in the vicinity of the air manifold of the polymer electrolyte fuel cell of Example 2 of the present invention.

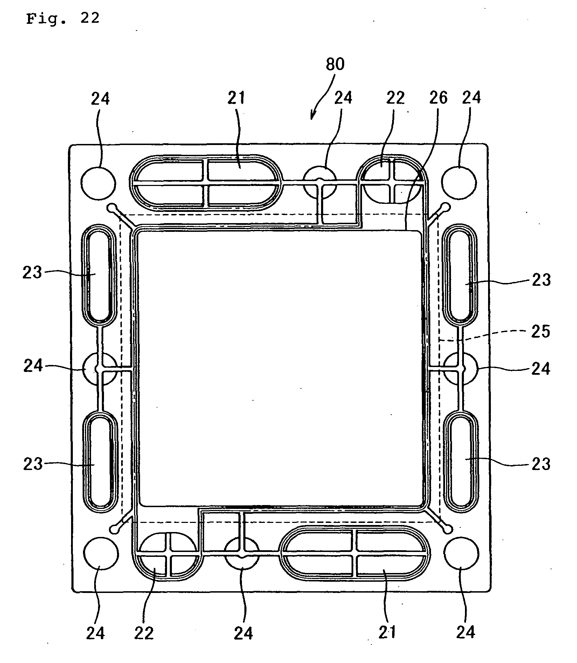

Figure 22 shows a top view showing the structure of the anode-side surface of the frame equipped with the polymer electrolyte fuel cell of Example 4 of the present invention.

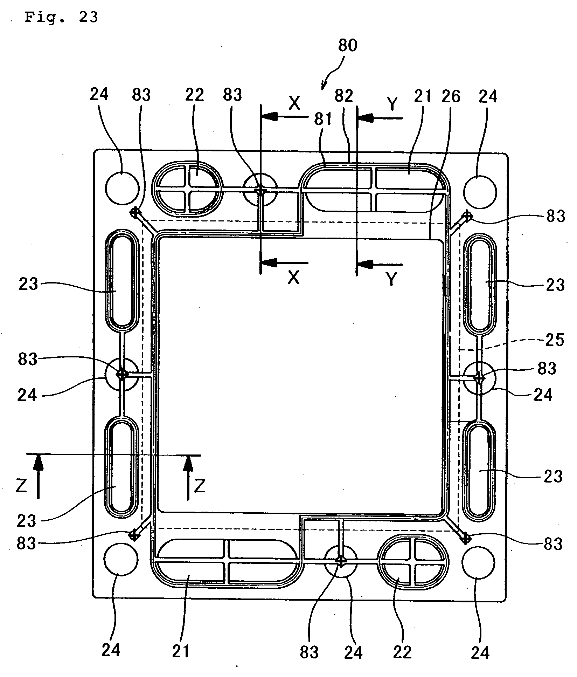

Figure 23 shows a top view showing the structure of the cathode-side surface of the frame equipped with the polymer electrolyte fuel cell of Example 4 of the present invention.

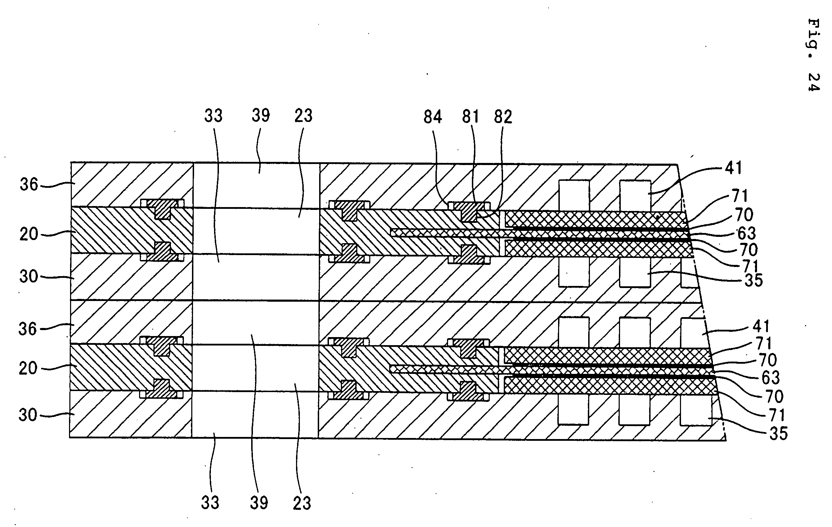

Figure 24 shows a partial cross-sectional view showing the structure in the vicinity of the water manifold of the polymer electrolyte fuel cell of Example 4 of the present invention.

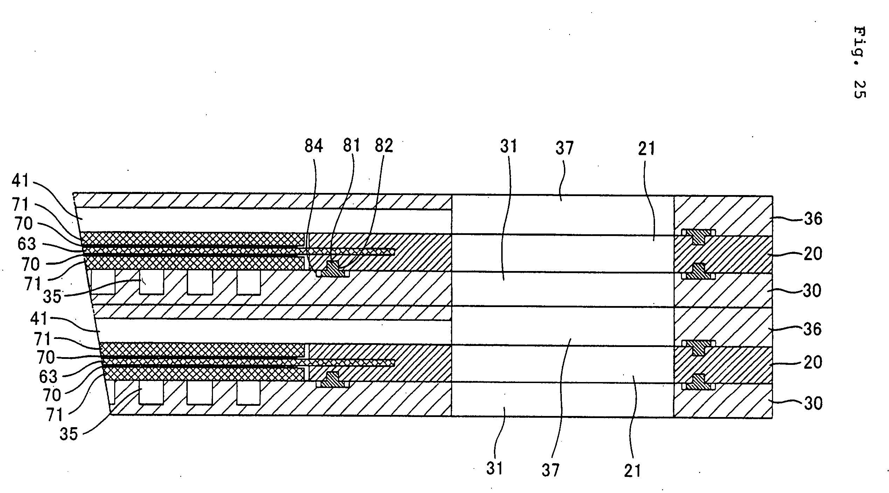

Figure 25 shows a partial cross-sectional view showing the structure in the vicinity of the air manifold of the polymer electrolyte fuel cell of Example 4 of the present invention.

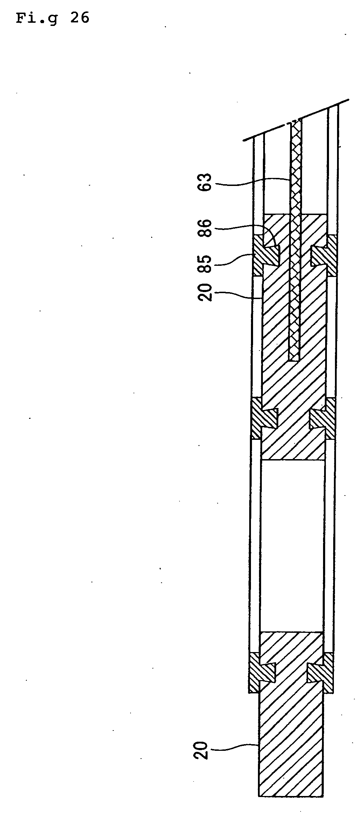

Figure 26 shows a partial cross-sectional view showing the structure of the frame equipped with the polymer electrolyte fuel cell of Example 5 of the present invention.

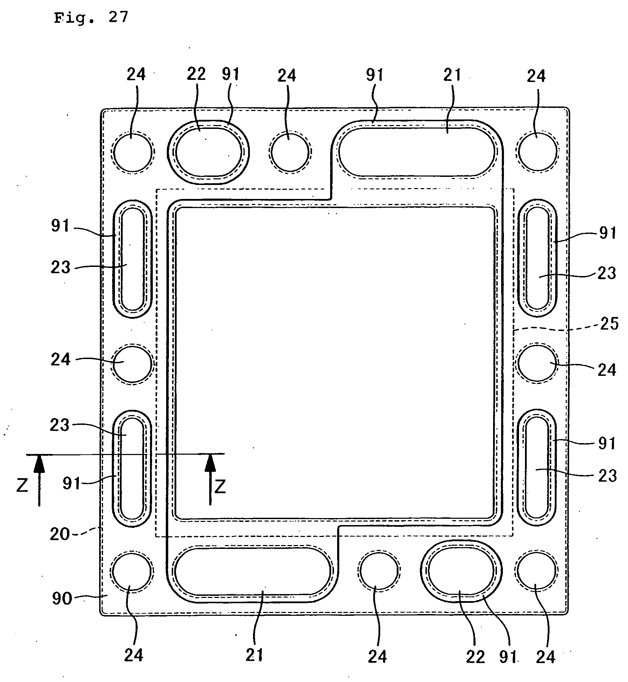

Figure 27 shows a top view showing the structure of the elastic body and the frame equipped with the polymer electrolyte fuel cell of Example 6 of the present invention.

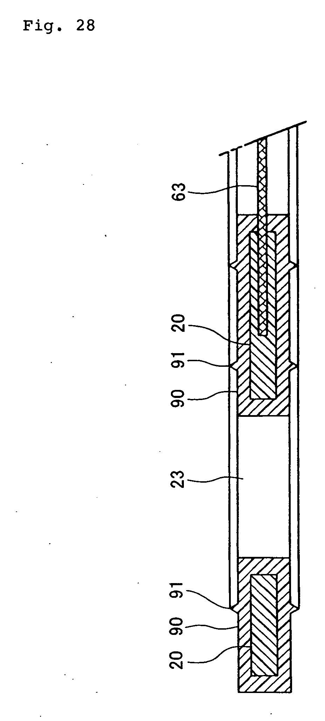

Figure 28 shows a view along line Z-Z in Figure 27.

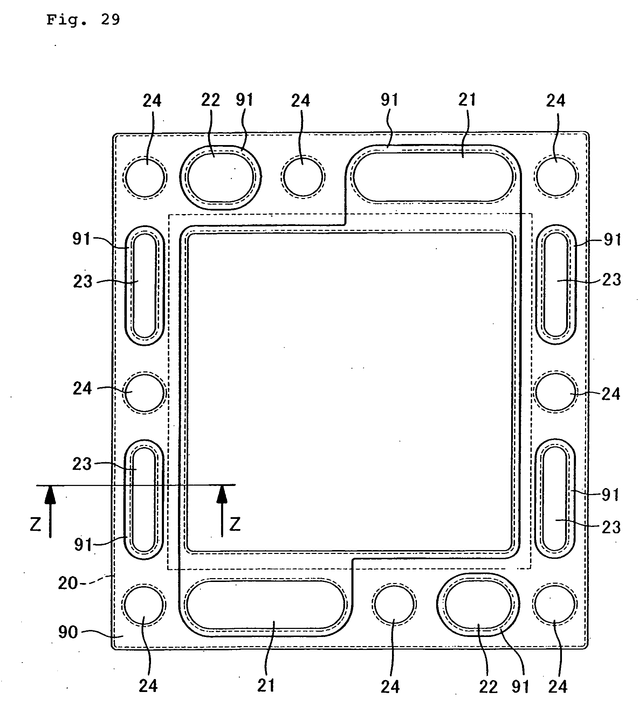

Figure 29 shows a top view showing the structure of the elastic body and the frame equipped with the polymer electrolyte fuel cell of Example 7 of the present invention.

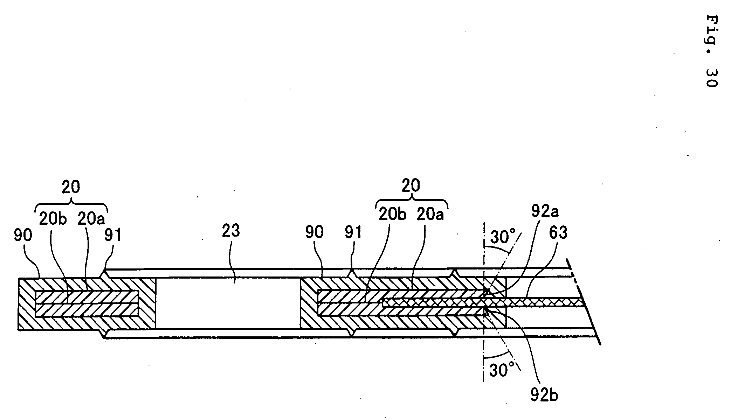

Figure 30 shows a view along line Z-Z in Figure 29.

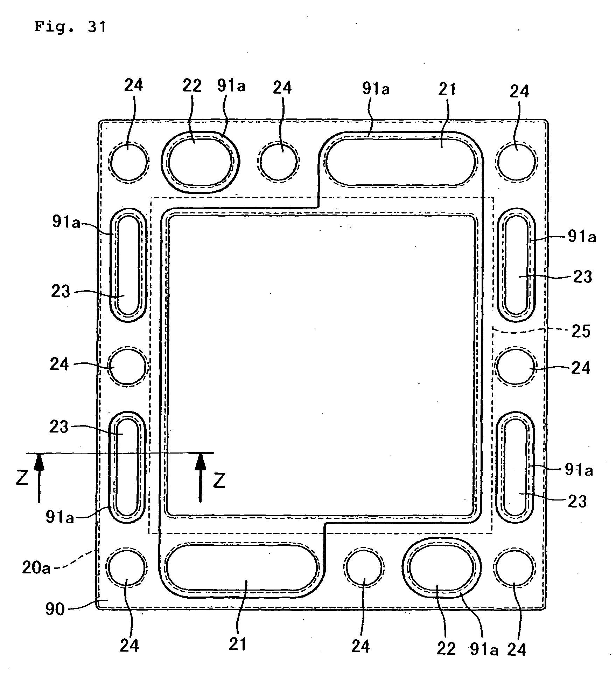

Figure 31 shows a top view showing the structure of the elastic body and the frame equipped with the polymer electrolyte fuel cell of Example 9 of the present invention.

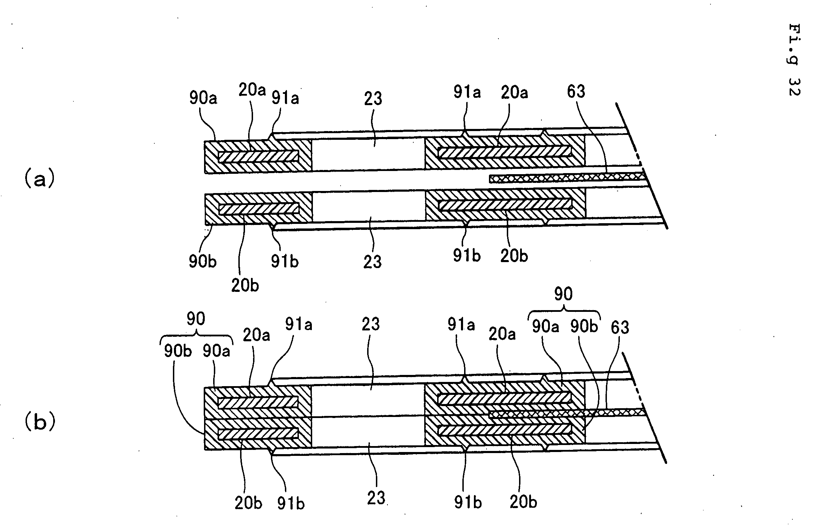

Figure 32 shows view along line Z-Z in Figure 31, where (a) and (b) are cross-sectional views showing the procedure for manufacturing the relevant structure.

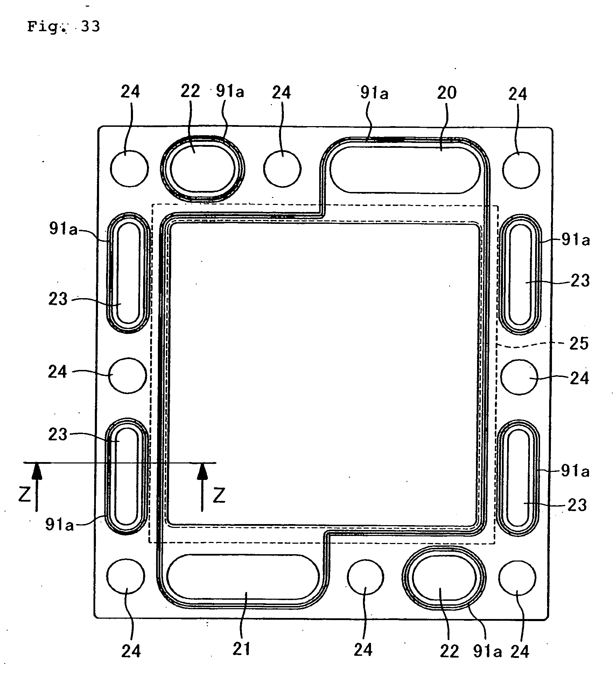

Figure 33 shows a top view showing the structure of a modified example of the elastic body and the frame equipped with the polymer electrolyte fuel cell of Example 10 of the present invention.

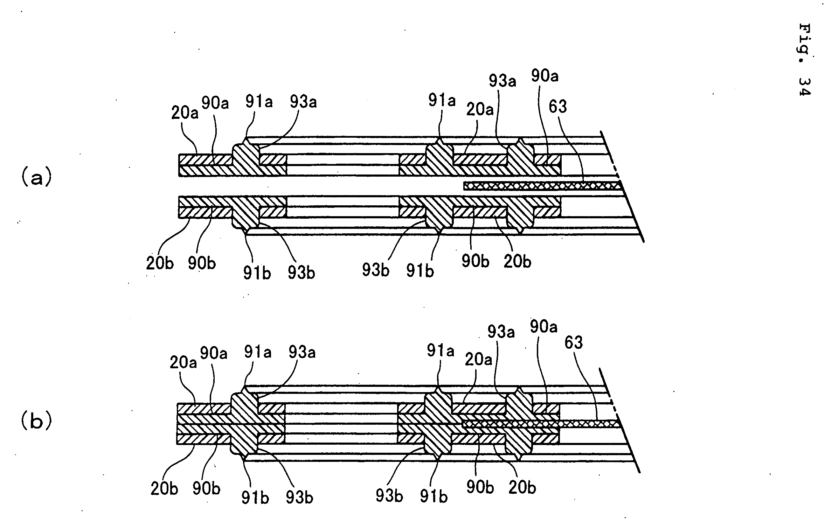

Figure 34 shows a view along line Z-Z in Figure 33, where (a) and (b) are cross-sectional views showing the procedure for manufacturing the relevant structure.

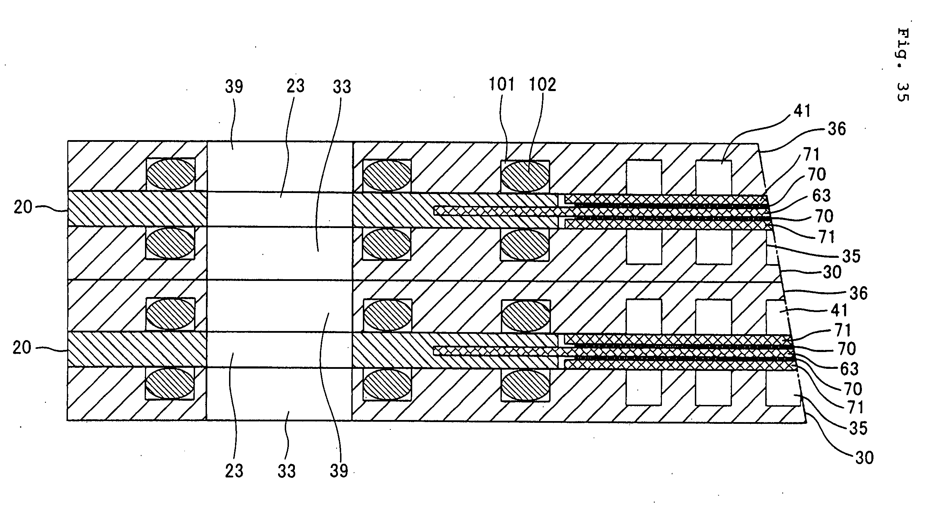

Figure 35 shows a partial cross-sectional view showing a modified example of the structure in the vicinity of the water manifold of the polymer electrolyte fuel cell of Example 1 of the present invention.

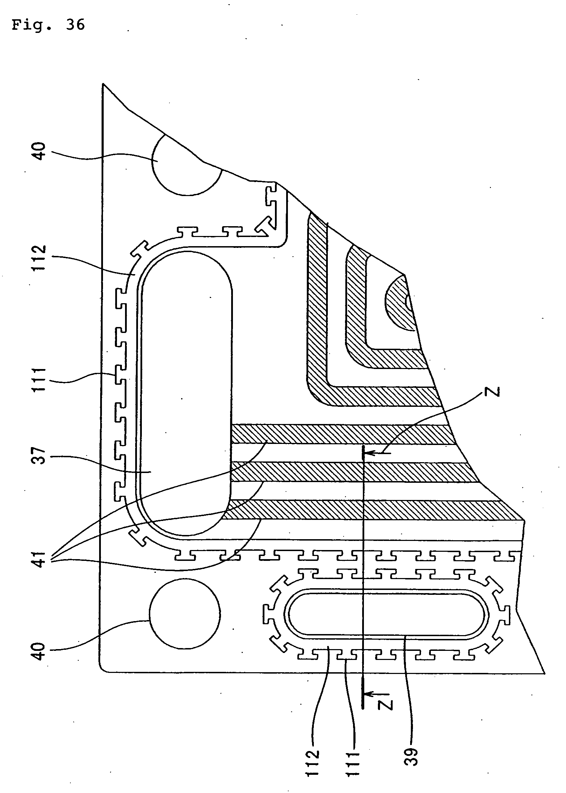

Figure 36 shows a top view showing the structure of the cathode separator that is crimped to the cathode-side surface of the frame equipped with the polymer electrolyte fuel cell of Example 3 of the present invention.

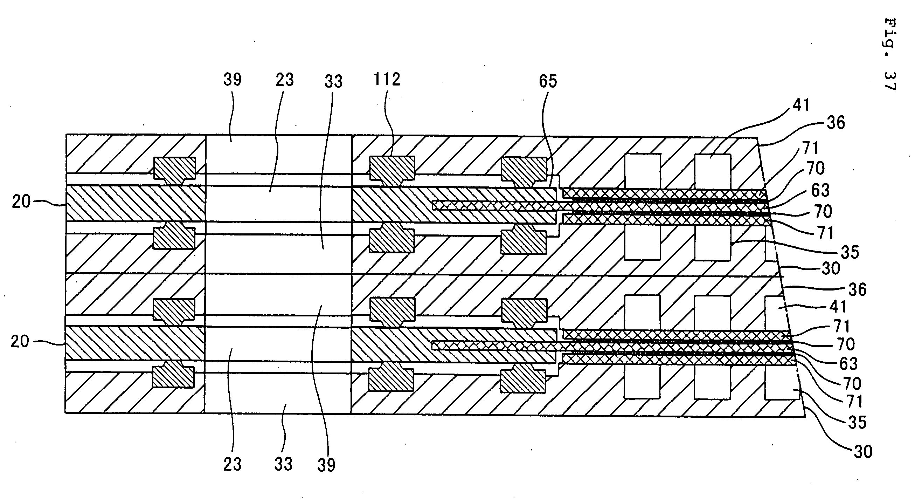

Figure 37 shows a partial cross-sectional view showing the structure in the vicinity of the water manifold of the polymer electrolyte fuel cell of Example 3 of the present invention.

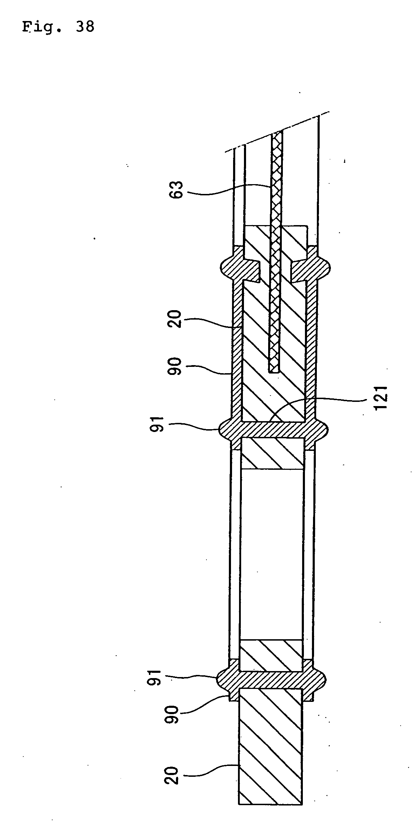

Figure 38 shows a partial cross-sectional view showing the structure of the frame equipped with the polymer electrolyte fuel cell of Embodiment 5 of the present invention.

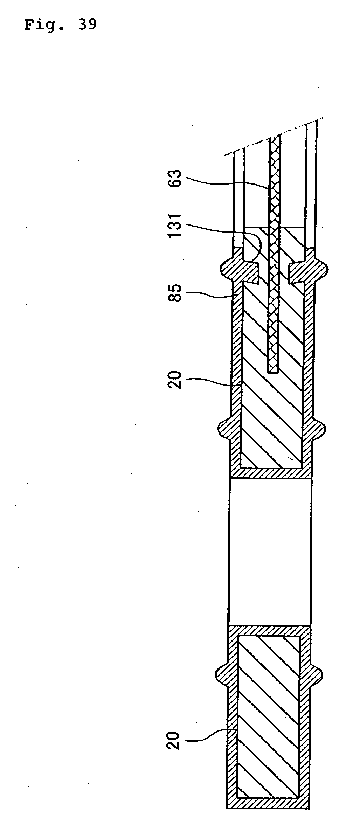

Figure 39 shows a partial cross-sectional view showing the structure of the frame equipped with the polymer electrolyte fuel cell of Embodiment 5 of the present invention.

### Best Modes for Carrying Out the Invention

Next, the modes for carrying out the present invention will be explained in detail, with reference to the drawings.

### (Embodiment 1)

The polymer electrolyte fuel cell of Embodiment 1 of the present invention forms, at the periphery of the polymer electrolyte membrane, a highly rigid frame that encloses and holds the relevant periphery so as to cover it seamlessly; this electrolyte membrane structure is used to form a seal structure that encloses and holds this electrolyte membrane structure between separators, via elastic bodies, thereby preventing gas cross-leaks. Furthermore, the simplest method of forming such a highly rigid frame is to seal and cover the periphery of the polymer electrolyte membrane with a highly rigid resin. That is, such a frame can be manufactured easily by performing insert molding with the polymer electrolyte membrane as the insert part.

Here, the elastic body preferably should have a modulus of elasticity of at most 200 MPa, in order to assemble a stack by using a practical fastening load. This is because, in the case of a polymer electrolyte fuel cell, the overall length of the seal line that seals each cell becomes long because of its planar structure. For example, in the case of a home stationary-type cell (electrode area: approximately 200 cm²), the overall length of the seal line is on the order of 2 m; and in the case of an in-vehicle cell (electrode area: approximately 1000 cm²), the overall length might be 10 m or more, depending on the shape. If the overall length of the seal line is this long, the line load allowed in a seal line must be approximately 10 N/mm or less, in order to assemble a stack by using a fastening load of several tons or less, including the loads exerted on the electrodes. In the case of line loads of this magnitude, even if a seal shape is devised so as to provide an interference (roughly 0.2-0.3 mm) that absorbs variations in the thicknesses of the separator and other structural material, it is impossible to assemble a stack if a material with a modulus of elasticity greater than 200 MPa is adopted as the elastic body. Therefore, as aforementioned, the elastic body used in the present embodiment preferably has a modulus of elasticity greater than 0 MPa and less than or equal to 200 MPa.

Furthermore, a modulus of elasticity of 200 MPa is equivalent to a rubber hardness of approximately 50 on the durometer hardness D scale. As a result, materials of the durometer hardness A scale that generally are distributed as rubber or elastomers naturally meet this requirement. On the other hand, in the case of PTFE, for example, which is generally used as a seal material, the modulus of elasticity is on the order of 500 MPa, so it is unsuitable as the elastic body used in the present embodiment.

In the present embodiment, the elastic body, frame, and separator are separate members, so the elastic body manufacturing process is unrestricted, and the elastic body can be shaped freely and appropriately as a rubber sheet, O-ring, etc. However, the higher the modulus of elasticity of the elastic body, the narrower the seal line must be, so the shape restrictions become strict.

The following types of materials are preferable as the frame that contacts an elastic body such as that aforementioned. This frame contacts the polymer electrolyte membrane, which is the reaction field, so it is necessary to provide chemical stability that inhibits chemical deterioration and dimensional variation resulting from water absorption. Moreover, the frame must have a high modulus of elasticity and a high deflection temperature under load to prevent drooping in the flow channel block. Also, assuming that the usual width of the flow channel of the fuel cell separator is 1-2 mm and that the thickness allowable for the frame is roughly on the order of 1 mm or less, it is preferable to limit the flexure displacement to within 10% of the aforementioned interference, under the aforementioned line load (10 N/mm). From such a standpoint, the modulus of elasticity of the frame material preferably is at least 2000 MPa.

Also, taking into consideration the fact that the operating temperature of the cell normally is up to 90 °C, the deflection temperature under load of the frame preferably is at least 120 °C. More specifically, from the standpoint of chemical stability, a crystalline resin is preferable to an amorphous resin as the resin material, and of these, the preferred resins are the so-called super-engineering-plastic-grade resins, which have high mechanical strength and high heat resistance. Consequently, polyphenylene sulfide (PPS), polyethyl ether ketone (PEEK), liquid crystal polymer (LCP), polyether nitrile (PEN), etc., are preferred materials because they have a modulus of elasticity from several thousand to several tens of thousands of MPa as well as a deflection temperature under load of at least 150 degrees. Also, even general-purpose resins such as glass-filled polypropylene (GFPP) are preferred materials because they have a modulus of elasticity that is several times that of non-filled polypropylene (modulus of elasticity: 1000-1500 MPa) as well as a high deflection temperature under load near 150 degrees.

Also, as discussed hereinafter, a method of manufacturing the frame by inserting a metal, etc., with a modulus of elasticity higher than that of the resin is preferable, and that of steel, which is the metal with the highest modulus of elasticity, is on the order of 2,000,000 MPa.

Therefore, the modulus of elasticity of the frame material preferably is at least 2000 MPa and is at most 2,000,000 MPa.

Next, an example based on the present embodiment will be explained.

### Example 1

Figure 11 is the top view showing the structure of the anode-side surface of the frame, which is equipped with the polymer electrolyte fuel cell of Example 1 of the present invention. Also, Figure 12 is the top view that similarly shows the structure of the cathode-side surface of the frame.

As shown in Figures 11 and 12, rectangular opening 26 is provided at the center of frame 20. As discussed hereinafter, rectangular MEA 25, which is larger by a predetermined value than this opening 26, is enclosed and held in frame 20. Also, air manifolds 21, hydrogen manifolds 22, water manifolds 23, and bolt holes 24 are formed as appropriate in the periphery of frame 20.

This frame 20 is formed so as to have outer dimensions of 200 mm × 180 mm and opening 26 dimensions of 124 mm square, by means of a 180-ton high-speed injection molding machine, with a polymer electrolyte membrane (Nafion 117 made by DuPont; thickness: 50 µm) stamped into a 140-mm-square shape by means of a Thomson mold. Also, this frame 20 is formed so as to have the two lines of beads (i.e., seal ribs) discussed hereinafter (height: 0.2 mm; vertex angle: 60°) on both sides of the 0.8-mm reference thickness part.

In the present example, the frame 20 insert is formed by means of a double-molding method. That is, first, as shown in Figure 19(a), only half of the frame (first molded part 61) is formed. Then, as shown in Figure 19(b), polymer electrolyte membrane 63 is inserted. Next, as shown in Figure 19(c), the same resin is used to form the remaining half (second molded part 62). As shown in Figure 19(a), depressions 64 (height: 0.2 mm; width: 0.5 mm; pitch: 1 mm) are provided all around the region contacting the insert part (polymer electrolyte membrane 63), in first molded part 61. In this case, after second molded part 62 is superposed, the periphery of polymer electrolyte membrane 63 (i.e., the insert part) is fused and sealed by the resin, and the polymer electrolyte membrane 63 is formed along the depressions 64 in first molded part 61, according to the injection pressure. As a result, polymer electrolyte membrane 63 is supported securely by the frame, without slipping into the inner circumference of the frame. For convenience, however, in figures other than Figure 19, the description was simplified by omitting the fact that the periphery of polymer electrolyte membrane 63 is uneven.

As aforementioned, in the present example, first molded part 61 was manufactured, after which this first molded part 61 was inserted into another mold and the insert was formed. From the standpoint of mass production, however, it also is possible to continuously form in one mold by using a slide mold or a rotary mold. Furthermore, it was possible to form satisfactorily without a short shot, by using glass filler-added PPS (DIC-PPS FZ-1140-B2, Dainippon Ink and Chemicals, Inc.) as the material for frame 20, and under the following molding conditions: injection temperature: 310°; mold temperature: 135°; injection pressure: 140 MPa; and injection speed: 560 mm/s.

Furthermore, in the present specification and claims, the structure equipped with polymer electrolyte membrane 63 and frame 20 obtained in this manner is called the polymer electrolyte membrane structure, and the structure in which the electrode layer is formed as discussed hereinafter on both sides of polymer electrolyte membrane 63 that makes up this polymer electrolyte membrane structure is called the polymer electrolyte membrane-electrode assembly structure.

A separator is disposed on each side of frame 20 shown in Figures 11 and 12. Figure 13 is the top view showing the structure of the anode separator that is crimped to the anode-side surface of the frame equipped with the polymer electrolyte fuel cell of Example 1 of the present invention. Similarly, Figure 14 is the top view showing the structure of the cathode separator crimped to the cathode-side surface of the frame.

As shown in Figure 13, hydrogen flow channel 35, which is formed in a predetermined pattern, is formed at the center of anode separator 30. Also, at the periphery of anode separator 30, air manifolds 31, hydrogen manifolds 32, water manifolds 33, and bolt holes 34 are formed at the locations corresponding to air manifolds 21, hydrogen manifolds 22, water manifolds 23, and bolt holes 24, respectively, formed in frame 20 shown in Figure 11.

On the other hand, as shown in Figure 14, air flow channels 41, which are formed in predetermined patterns, are formed at the center of cathode separator 36. Also, at the periphery of cathode separator 36, air manifolds 37, hydrogen manifolds 38, water manifolds 39, and bolt holes 40 are formed at the locations corresponding to air manifolds 21, hydrogen manifolds 22, water manifolds 23, and bolt holes 24, respectively, formed in frame 20 shown in Figure 12.

This anode separator 30 and cathode separator 36 were manufactured by means of cutting and machining, by using Glassy Carbon (t = 3 mm) made by Tokai Carbon Co. as the material. Furthermore, to receive the rubber sheet discussed hereinafter, 0.7-mm spot-facing processing is performed in the region contacting the rubber sheet of anode separator 30 and cathode separator 36.

The aforementioned frame 20, anode separator 30, and cathode separator 36 are each crimped via a rubber sheet, which is the elastic body. Figure 15 is the top view showing the structure of the rubber sheet disposed between the anode separator and the frame, which is equipped with the polymer electrolyte fuel cell of Example 1 of the present invention. Similarly, Figure 16 is the top view showing the structure of the rubber sheet disposed between the frame and the cathode separator.

As shown in Figure 15, at the center of anode-side rubber sheet 50, opening 52 is formed in the regions corresponding to rectangular opening 26 and hydrogen manifolds 22 formed in frame 20 shown in Figure 11. Also, at the periphery of rubber sheet 50, air manifolds 51, water manifolds 53, and bolt holes 54 are formed at the locations corresponding to air manifolds 21, water manifolds 23, and bolt holes 24, respectively, formed in frame 20 shown in Figure 11.

On the other hand, as shown in Figure 16, at the center of cathode-side rubber sheet 55, opening 56 is formed in the regions corresponding to air manifolds 21 and rectangular opening 26 formed in frame 20 shown in Figure 12. Also, at the periphery of rubber sheet 55, hydrogen manifolds 57, water manifolds 58, and bolt holes 59 are formed at the locations corresponding to hydrogen manifolds 22, water manifolds 23, and bolt holes 24, respectively, formed in frame 20 shown in Figure 12.

Viton rubber sheets (thickness: 0.6 mm; rubber hardness: 55; made by Fujikura Rubber Co.) were used as these rubber sheets 50 and 55, which were stamped into shapes like those aforementioned with reference to Figures 15 and 16, so as to pressure-weld with the beads formed on the respective cathode-side and anode-side surfaces of frame 20.

Thus, in the present example, a frame and separator are attached via a rubber sheet, but an elastic body other than a rubber sheet also may be used. This elastic body must be displaceable at least about 0.2 mm under the aforementioned line load (10 N/mm), particularly in order to compensate for the low surface accuracy of the molded separator, and the modulus of elasticity must be greater than 0 MPa and at most 200 MPa.

Also, although this elastic body does not contact the polymer electrolyte membrane, it must be hot-water resistant because it is exposed constantly to moist gas normally in the temperature range from 70 °C to 90 °C. It also is essential that there be no effluent (particularly substances such as sulfur, halogens, etc., that act as catalyst poisons) that adversely affects the cell catalyst; and in the case of vulcanized rubber, care is particularly necessary in the vulcanization method. Consequently, the preferred material is a rubber with high resistance to hot water (e.g., EPDM, fluorocarbon rubber). Moreover, rather than sulfur cross-linked rubber, the preferred rubber is a peroxide cross-linked or radiation cross-linked material that does not contain materials such as those aforementioned. Also, an applicable material is a TPE (thermoplastic material) (e.g., a polyolefin elastomer (TPO), a fluoroelastomer) that uses the aforementioned material as the soft segment and a thermoplastic resin material as the hard segment.

Figure 17 is a partial cross-sectional view showing the structure in the vicinity of the water manifold of the polymer electrolyte fuel cell of Example 1 of the present invention. Similarly, Figure 18 is a partial cross-sectional view showing the structure in the vicinity of the air manifold. These figures, Figure 17 and Figure 18, are cross-sectional views of the stack at locations corresponding to lines Z-Z and Y-Y, respectively, in Figure 12. Furthermore, omitted from Figures 17 and 18 for convenience of explanation are the seal structures for the cooling water surface and the cooling water flow channel provided in anode separator 30 and cathode separator 36. However, the seal structures for the cooling water surface and the cooling water flow channel are formed as in the prior art.

Next, the MEA structure will be explained. As shown in Figures 17 and 18, catalyst layer 70 is formed on both surfaces of polymer electrolyte membrane 63. This catalyst layer 70 is formed as follows: First, platinum is supported in the 1:1 weight ratio on Ketjen Black EC (a furnace black made by Ketjen Black International Co.) with a the specific surface area of 800 m²/g and a DBP oil adsorption of 360 ml/100 g. Next, 35 g of water and 59 g of alcohol suspension of a hydrogen ion-conductive polymer electrolyte (made by Asahi Glass Co., 9% FSS) were admixed with 10 g of this catalytic powder, after which this was dispersed by using an ultrasonic mixer, thereby preparing catalyst layer ink. Catalyst layer 70 was formed by coating this catalyst layer ink onto a polypropylene film (Torayfan 50-2500 made by Toray Industries, Inc.) and then drying it. The obtained catalyst layer 70 was cut into 120 mm × 120 mm pieces, and these were transferred to the exposed parts of polymer catalyst membrane 63 of the aforementioned molded part (i.e., both sides of the parts not contacting frame 20), under the following conditions: 135-°C temperature and 32-kgf/cm² pressure.

In this manner, catalyst layers 70 are formed on both sides of polymer electrolyte membrane 63, after which 123-mm² gas diffusion electrode 71 (CARBEL CF400 made by Japan Goretex Inc.; thickness: 400 microns) is disposed on these catalysts layers 70.

As shown in Figures 17 and 18, frame 20 that encloses and holds the periphery of polymer electrolyte membrane 63 is enclosed and held by anode separator 30 and cathode separator 36, via rubber sheets 50, 55. The 12 cells manufactured in this manner are fastened with a fastening force of 850 kgf by means of a fastening jig, thereby assembling the 12-cell stack.

The 12-cell stack constructed in this manner was subjected to the following property evaluation tests:
(1) Normal cross-leak test
   In this cross-leak test, a nitrogen gas supply source (pressure: 30 kPa, which is 3x the normal pressure of a cogeneration fuel cell) is connected to the hydrogen manifold of the aforementioned 12-cell stack, and the amount of gas that escapes from the cathode side is measured.
(2) Threshold cross-leak test
   In this cross-leak test, the pressure of the gas supplied to the hydrogen manifold of the aforementioned 12-cell stack is increased gradually, and the supply source pressure at the moment when the gas escapes from the cathode side is measured.

As a result of the normal cross-leak test, the amount of gas that escaped from the cathode side was 0 ccm. Also, as a result of the threshold cross-leak test, the supply source pressure at the moment when the gas escaped from the cathode side was 610 kPa.

Thus, no leak was observed in the normal leak test, and the cell's open-circuit voltage (OCV) was approximately 0.99 V, so a satisfactory characteristic was exhibited. Also, the results of the threshold cross-leak test are used to determine the unexpected operation of the gas supply system (e.g., behavior of cells in response to valve opening and closing). The aforementioned test results indicate that the affected cell stack is suitable for applications with high supply gas pressures (in-vehicle supply source pressure: approximately 180 kPa; however, the inter-polar differential pressure is, at its maximum, a fraction thereof).

In the present example, the elastic body provided between the separator and the frame is sheet shaped, but it is not particularly limited to the sheet shape. For example, it may have a linear shape (e.g., multiple O-rings, angular rings). For the region provided in the separator for the elastic body, also, the appropriate shape can be adopted, such as a groove that conforms to an O-ring when it is used. Figure 35 shows the cross-sectional structure of the principal parts when an O-ring is used as the elastic body. In the example shown in Figure 35, grooves 101 are provided in anode separator 30 and cathode separator 36, and O-rings 102 are disposed in these grooves 101.

Furthermore, in cases where a rubber sheet is used as the elastic body, for example, it is desirable to provide a structure that appropriately ensures the sealability or reduces the fastening force, such as a structure that provides beads (seal ribs) on the frame or separator surfaces.

### (Embodiment 2)

In Embodiment 1, an elastic body is disposed between the frame and the separator. By contrast, Embodiment 2 is a polymer electrolyte fuel cell such that the need for an elastic body (e.g., the rubber sheet in Embodiment 1) is eliminated by using an elastic separator. To be specific, elasticity is provided by the separator itself, by using a molded separator (with a modulus of elasticity on the order of 150 MPa), such as one press-formed after mixing a resin into exfoliated graphite, etc. In this case, it is preferable to adopt a material and shape that, among other things, ensures the necessary amount of displacement while reducing the fastening force during stack assembly, by using a high-strength material (desired modulus of elasticity: ≥10,000 MPa) on the frame, for example by structuring such that a bead (triangular rib) is provided in the frame and engages the separator.

Next, an example based on the present embodiment will be explained.

### Example 2

Figure 20 is a partial cross-sectional view showing the structure in the vicinity of the water manifold of the polymer electrolyte fuel cell of Example 2 of the present invention. Similarly, Figure 21 is a partial cross-sectional view that shows the structure in the vicinity of the air manifold. Furthermore, Figure 20 and Figure 21 are cross-sectional views of the stack in the same location as shown in Figures 17 and 18, respectively, in Embodiment 1. In Figure 20, as in Figure 17, the seal structures for the cooling water surface and the cooling water flow channel provided in anode separator 30 and cathode separator 36 are omitted for convenience of explanation.

As shown in Figures 20 and 21, frame 20 that encloses and holds the periphery of polymer electrolyte membrane 63 is enclosed and held by anode separator 30 and cathode separator 36, which are made of exfoliated graphite. For example, as such an anode separator 30 and cathode separator 36, it is possible to utilize an exfoliated graphite molded separator (made by Hitachi Chemical Co.) that is press-formed after blending a resin into exfoliated graphite.

As shown in Figures 20 and 21, as in Example 1, the following structure results: bead (triangular rib) 65 is provided on both surfaces of frame 20, thereby engaging elastic anode separator 30 and cathode separator 36. As a result, even if a comparatively small fastening force is used for fastening, it is possible to realize a sufficient seal effect. Also, in this case, frame 20 preferably is composed of a material with a comparatively high strength (desirable modulus of elasticity: ≥10,000 MPa).

A 12-cell stack is assembled by using a 1400-kgf fastening force to fasten the 12 cells manufactured as aforementioned, by means of a fastening jig.

For the 12-cell stack assembled in this manner, the present inventor(s) and others conducted a normal cross-leak test and a threshold cross-leak test, as in Example 1.

As a result of the normal cross-leak test, the amount of gas that escaped from the cathode side was 0 ccm. Also, as a result of the threshold cross-leak test, the supply source pressure at the moment when the gas escaped from the cathode side was 465 kPa.

As is evident from the results of the aforementioned tests, when the separator itself is the elastic body, it is not particularly necessary to enclose an elastic body between the frame and separator, and it is possible to obtain an adequate seal during actual use, which simplifies the structure and facilitates assembly.

### (Embodiment 3)

Embodiment 3 is the polymer electrolyte fuel cell obtained by integrating the separator and elastic body mentioned in Embodiment 1, by means of insert molding.

Furthermore, the separator, which is composed principally of carbon, basically does not contact an elastomer (e.g., a fluoropolymer, EPDM). As a result, it is necessary to adopt a shape such as one that provides the retaining groove discussed hereinafter, to prevent the separator and elastic body from separating as the result of shrinkage after molding.

Next, an example based on the present embodiment will be explained.

### Example 3

Figure 36 is the top view showing the structure of the principal parts of the cathode separator crimped to the surface of the cathode side of the frame provided in the polymer electrolyte fuel cell of Example 3 of the present invention. Also, Figure 37 is a partial cross-sectional view showing the structure of the same location as that shown in Figure 17 in Embodiment 1. This Figure 37 is a cross-sectional view of the stack at the location corresponding to line Z-Z in Figure 36. Furthermore, in Figure 37, as in Figure 17, the seal structures for the cooling water surface and the cooling water flow channel provided in anode separator 30 and cathode separator 36 are omitted for convenience of explanation.

In Example 3, the used hot-press-formed separator (prototyped by Nisshin Spinning Co.) was shaped such that multiple retaining grooves 111 were formed in a seal line groove such as that shown in Figure 36, and it was composed principally of carbon powder and a phenolic thermosetting resin. For this molded part, an elastomer blend that was composed principally of a fluoroelastomer (Viton GDL; degree of hardness: 55; made by DuPont Dow Elastomers) and that contained minute amounts of surfactant and a cross-linking agent was formed on both sides by means of hot transfer molding. The molding conditions in this case were as follows: primary vulcanization at 180 °C × 5 minutes; secondary vulcanization at 195 °C × 8 hours.

As a result of this heat treatment, the elastomer (112 in Figure 36) forms cross-links and becomes elastic, but the volume shrinks as it does so. Therefore, if the retaining groove is not formed, the volume shrinkage causes the elastomer (i.e., elastic body) to separate from the separator, so it is impossible to obtain a satisfactory molded part. By contrast, it is possible to prevent elastomer (elastic body) 112 from separating from the separator, even under the aforementioned temperature conditions, by forming retaining groove 111 as in Example 3, so it becomes possible to obtain a satisfactory molded part with high yield.

The 12-cell stack is constructed by fastening the 12 cells manufactured thus with a fastening force of 1400 kgf, by means of a fastening jig.

Regarding the 12-cell stack constructed in this manner, the inventor(s) and others conduct the normal cross-leak test and the threshold cross-leak test, as in Example 1.

As a result of the normal cross-leak test, the amount of gas that escaped from the cathode side was 0 ccm. Also, as a result of the threshold cross-leak test, the supply source pressure at the moment when the gas escaped from the cathode side was 428 kPa.

### (Embodiment 4)

The polymer electrolyte fuel cell of Embodiment 4 is obtained by integrating the elastic body and the frame mentioned in Embodiment 1. That is, as post-processing after the frame insert molding performed with the electrolyte membrane mentioned in Embodiment 1 as the insert part, the elastic body was subjected to insert molding, with the electrolyte membrane-inserted frame as the insert part.

Furthermore, in Embodiments 4 to 6, it is assumed that the elastic body is a thermoplastic elastomer. This is because it is difficult to apply a thermally cross-linked elastomer that requires secondary vulcanization, from the standpoint of the heat resistance of the frame, which has an electrolyte membrane and thermoplasticity.

On the other hand, in Embodiment 4 it is possible to adopt the most preferable shape that takes the following into consideration: improvement in reliability and yield by preventing separation; high chemical cleanliness because a surfactant is not used for bonding a non-adhesive material; and superior productivity as the result of a short machine cycle time. In the case of this embodiment, the frame, which is the insert part, and the thermoplastic elastomer have a common thermoplastic component. During molding, the surface of the frame is melted by the heat and mixes with the thermoplastic elastomer. After these cool, they fuse and bond. This construction method is narrowly defined as the two-color molding method. For example, when GFPP is used as the frame material, optimal two-color molding is enabled by using TPO containing polypropylene in the hard segment. Similarly, when GFPA (glass-filled polyamide) is used as the frame material, a polyamide elastomer is suitable.

Next, an example based on the present embodiment will be explained.

### Example 4

Figure 22 is the top view showing the structure of the anode-side surface of the frame, which is equipped with the polymer electrolyte fuel cell of Example 4 of the present invention. Similarly, Figure 23 is the top view showing the structure of the cathode-side surface of the frame. Furthermore, in Example 4, also, each manifold, bolt hole, etc., is provided as in Embodiment 1, so the same symbols are used and the explanations are omitted.

In frame 20, groove 82 is formed along air manifold 21, hydrogen manifold 22, water manifold 23, bolt hole 24, and opening 26. As shown in Figures 22 and 23, elastic body 81, which functions as the seal, is mounted in this groove 82. Furthermore, 83 in the figure indicates the gate used when infusing this elastic body 81 into groove 82.

Figure 24 is a partial cross-sectional view showing the structure in the vicinity of the water manifold of the polymer electrolyte fuel cell of Example 4 of the present invention. Similarly, Figure 25 is a partial cross-section showing the structure in the vicinity of the air manifold. These figures, Figure 24 and Figure 25, are cross-sectional views of the stack at the locations corresponding to line Z-Z and line Y-Y, respectively, in Figure 23. Furthermore, in Figures 24 and 25, the seal structures for the cooling water surface and the cooling water flow channel provided in anode separator 30 and cathode separator 36 are omitted for convenience of explanation. However, these seal structures of the cooling water surface and the cooling water flow channel are identical or at least similar to those in the prior art.

As shown in Figures 24 and 25, grooves 82 are formed at the appropriate positions on both sides of frame 20. Also, at the positions corresponding to groove 82 on the surfaces of anode separator 30 and cathode separator 36 that contact frame 20, grooves 84 wider than grooves 82 are formed. Elastic bodies 81 are disposed within the region formed between these grooves 82 and 84.

Next, the method of manufacturing the fuel cell of the present example, which is configured as aforementioned, will be explained. Furthermore, the cell's planar size, the material and size of the polymer electrolyte membrane, overviews of the used molding machines and the insert construction method, the catalyst layer coating method, the separator material, and basic processes such as the processing method are the same as in Example 1, so their explanations are omitted.

After polymer electrolyte membrane 63 was subjected to the same processing as in Example 1, a glass-filled polypropylene (R250G made by Idemitsu Petrochemical Co.) was used to form frame 20 (reference thickness: 1.4 mm), on both sides of which were formed grooves 82, which were the flow grooves (width: 2.0 mm; depth: 0.3 mm) for two-color molding. Next, this was ejected from the mold, after which it was transferred to another molding machine, where an elastic body (material: Santoprene 8101-55; made by Santoprene Japan made by Advanced Elastomer Systems Japan) 81 composed of a linear polyolefin elastomer (one-side thickness: 0.6 mm) was formed. Furthermore, in this case, it is possible to mold both sides from one side by utilizing the manifolds and bolt holes.

At this time, the mold shrinkage factor of elastic body 81 was 15/1000. However, the first color (i.e., the frame) and the second color (i.e., the elastic body) are tightly fused, so no separation or other problem caused by second-color mold shrinkage was observed.

The Thomson mold removed the unnecessary two-color molded parts, and the 12-cell stack was constructed as in Example 1.

Regarding the 12-cell stack constructed as aforementioned, the inventor(s) and others conducted the normal cross-leak test and the threshold cross-leak test, as in Example 1.

As a result of the normal cross-leak test, the amount of gas that escaped from the cathode side was 0 ccm. Also, as a result of the threshold cross-leak test, the supply source pressure at the moment when the gas escaped from the cathode side was 380 kPa.

### Example 5

Example 5 is a polymer electrolyte fuel cell obtained by means of the a two-color molding method different from that in Example 4.

Figure 26 is a partial cross-sectional view showing the structure of the frame provided by the polymer electrolyte fuel cell of Example 5 of the present invention. As shown in Figure 26, tapered groove 86, which expands toward the center in the thickness direction, is formed in frame 20, which encloses and holds the periphery of polymer electrolyte membrane 63. In other words, undercut groove 86 is formed in frame 20. Also, although not shown in Figure 26, as in the case discussed previously in Example 4 with reference to Figure 24, a groove wider than groove 86 is formed at the position corresponding to groove 86 in the surface of each separator contacting frame 20, and elastic body 85 is disposed in the region formed between this groove and groove 86. That is, undercut elastic body 86 is filled with the elastic body.

Furthermore, in Figure 26, for convenience only polymer electrolyte membrane 63 of the MEA is shown, and the catalyst layers and gas diffusion electrodes are omitted.

Next, the method of manufacturing the polymer electrolyte fuel cell of the present example, which is configured as aforementioned, will be explained. Furthermore, the cell's planar size, the material and size of the polymer electrolyte membrane, overviews of the used molding machines and the insert construction method, the catalyst layer coating method, the separator material, and basic processes such as the processing method are the same as in Example 1, so their explanations are omitted.

After polymer electrolyte membrane 63 was subjected to the same processing as in Example 1, EPDM-added PPS (DIC-PPS-Z230 made by Dainippon Ink and Chemicals, Inc.) was used to form frame 20 (reference thickness: 1.4 mm), on both sides of which were formed grooves 86, which were the flow grooves (width: 2.0 mm; depth: 0.3 mm; draft angle: -3.5° (i.e., reverse taper)) for two-color molding. This material has a little elasticity, so it can release from the mold without difficulty at the aforementioned draft angle. Next, this frame 20 was ejected from the mold, after which it was transferred to another molding machine, where an elastic body (material: Santoprene 8121-64-W233 made by Santoprene Japan) 85 composed of a linear polyolefin elastomer (one-side thickness: 0.6 mm) was formed. This material, TPE, which usually is called corner mold grade, is used as the window frame seal material in automobiles, and it is a grade with particularly good adhesion to EPDM. In frame 20, which is composed of PPS, there is a tendency for EPDM to appear on the surface as the result of lamination, so it had a peel strength that, coupled with the aforementioned draft angle, presented no practical problem, even in the cases of PPS and TPE, which could not be expected to exhibit intrinsic adhesiveness.

The fact that an alloy with some elasticity is used in the frame is advantageous, particularly in the process used to form the second color after transferring the molded part of the first color to another mold, as aforementioned. Regarding the mold clearance (insert clearance) when subjecting the first-color molded part to mold clamping, it is preferable to compress the molded part in a mold, by on the order of several tens of microns. In the case of a highly rigid molded product, however, the material is weak, so particularly rigorous control is required with regard to the finished thickness of the first-color molded part and the clearance of the second-color mold. However, when an alloy is used in the frame, this condition is relaxed somewhat, thereby simplifying control, thereby improving the yield.

### (Embodiment 5)

In Embodiment 4, it is assumed that the frame and elastic body basically have common components and that the molding fuses both. However, particularly when considerable fluidity is required in the frame and elastic body as the cell area increases, if the chemical stability and other requirements are taken into consideration, it sometimes is impossible to select the aforementioned ideal material. Embodiment 5 was devised so that, even in such a case, problems such as separation between the frame and elastic body would not occur.

To be specific, in Embodiment 5, first, the polymer electrolyte membrane is insert-molded by using the frame material. Then this frame-electrolyte membrane assembly is coated with the elastic body material and then formed. As a result, it is possible to avoid the peeling of the two parts, even the frame material and elastic body material lack a fusible common component.

For example, as discussed later with reference to Figures 27 and 28, in a structure such that the entire surface of the frame is covered by the elastic body, there is no danger of separation because the entire frame is squeezed and held by the mold shrinkage of the second-color resin. Also, to prevent peeling, the following mode (i.e., anchoring) is effective: As shown in Figure 38, through-hole 121 is provided in the area corresponding to the seal line of the frame, and the front and back surfaces of elastic body 90, which is the second color, are connected via this through-hole 121.

Or, as in the case mentioned previously with reference to Figure 26 in Example 5, it also is possible to adopt a method that, for example, prevents peeling of the second color by infusing the second color into the groove, by providing a back-draft (undercut and negative draft angle) 131 in the groove (see Figure 39).

In areas where electrolyte membrane 63 of the innermost circumference of frame 20 is held, the aforementioned anchoring is impossible, so to prevent peeling of this part, it is desirable to provide such an undercut 131. In the case of undercut 131 like that shown in Figure 39, it is possible to easily form by using an angular pin.

By designing the molded parts and molds by appropriately combining a coating, an anchoring, and an undercutting such as those explained previously, it is possible to perform two-color molding without the non-fusible materials peeling from each other, as the result of the shape effect.

Next, an example based on the present embodiment will be explained.

### Example 6

Figure 27 is the top view showing the structure of the elastic body and frame equipped with the polymer electrolyte fuel cell of Example 6 of the present invention. Also, Figure 28 is the view along line Z-Z in Figure 27. Furthermore, in Example 6, also, each manifold, bolt hole, etc., is provided in the frame and elastic body, as in Example 1, so the same key numbers were assigned and the explanations were omitted. (For convenience, only the key number for each manifold and bolt hole formed in the frame is assigned.)

As shown in Figures 27 and 28, elastic body 90 is provided so as to cover the entire surface of frame 20, which encloses and holds the periphery of polymer electrolyte membrane 63. Bead 91, which is identical to the bead formed in the frame in Example 1, is formed in this elastic body 90. Furthermore, in Figure 28, for convenience, only polymer electrolyte membrane 63 of MEA 25 is shown, and the catalysts layers and gas diffusion electrodes are omitted.

In the present example, a glass-filled PPS (DIC-PPS FZ1140-B2 made by Dainippon Ink and Chemicals, Inc.) is used as the first-color material that forms frame 20, and a polyolefin elastomer (Santoprene 8101-55 made by Santoprene Japan) is used as the second-color material that forms elastic body 90. Here, the thickness of frame 20 was 0.75 mm, and the reference thickness of elastic body 90 was 0.25 mm. Also, the height of bead 91 provided on both sides of elastic body 90 was 0.2 mm.

During molding, a technique similar to that in Example 2 was adopted, and a subrunner from the center of each manifold was used to flow to both sides, with the manifold end as the reference point. Figures 27 and 28 show the state after the unnecessary parts were removed.

PPS and polyolefin are infusible materials. Consequently, if ordinary PPS is used for the frame in Example 2, second-color peeling is unavoidable. In the case of this example, however, the frame is structured so as to be covered by the elastic body, so peeling of the frame and elastic body and other problems were not observed.

In this example, also, a 12-cell stack is constructed as in Example 1. For this 12-cell stack, the present inventor(s) and others conducted a normal cross-leak test and a threshold cross-leak test, as in Example 1.

As a result of the normal cross-leak test, the amount of gas that escaped from the cathode side was 0 ccm. Also, as a result of the threshold cross-leak test, the supply source pressure at the moment when the gas escaped from the cathode side was 475 kPa. This confirmed the high sealing efficacy in the present example, also.

### (Embodiment 6)

Unlike Embodiments 4 and 5, Embodiment 6 is obtained by batch-forming inserts by using the elastic body material, with the part formed by enclosing and holding the polymer electrolyte membrane in a pair of separate-piece-type frames as the insert part. This construction method is effective in cases such as those where double-moldability is poor for resin materials applicable as the frame, or where the required molding temperature lies outside the allowable range for the insert molding (which normally is performed at a molding temperature ≤130 degrees) of a polymer electrolyte membrane, so it is difficult to insert-mold the polymer electrolyte membrane by using the frame material. That is, it is effective when, for example, it is particularly desired to raise the mold temperature for thin molding or when it is desired to apply a material that readily exhibits subsequent shrinkage (normally, the higher the mold temperature, the less the degree). It is preferable to use this technique because it widens the material selection range. Also, in this technique, the frame material is not necessarily limited to a resin material, so a metal plate, ceramic plate, etc., can be applied. Consequently, even in cases such as that where it is difficult to perform thin molding because the frame area increased as the cell became larger, the present invention can be implement by using this technique.

Next, an example based on the present embodiment will be explained.

### Example 7

Figure 29 is the top view showing the structure of the elastic body and frame, which is equipped with the polymer electrolyte fuel cell of Example 7 of the present invention. Also, Figure 30 is the view along line Z-Z in Figure 29. Furthermore, in Example 7, also, each manifold, bolt hole, etc., is provided in the frame and elastic body, as in Example 1, so the same key numbers were assigned and the explanations were omitted. (For convenience, only the key number for each manifold and bolt hole formed in the frame is assigned.)

As shown in Figures 29 and 30, frame 20 is composed of frame 20a and frame 20b, which is crimped to the lower surface of this frame 20a. The periphery of polymer electrolyte membrane 63 is enclosed and held by this frame 20a and frame 20b.

As shown in Figure 30, inclined part 92a that extends upward at a predetermined angle (30° in Figure 30) is provided at the inner circumference of frame 20a (i.e., at the edge of the side where the periphery of polymer electrolyte membrane 63 is enclosed and held). Similarly, inclined part 92b that extends downward at a predetermined angle (30° in Figure 30) is provided at the inner circumference of frame 20b (i.e., at the edge of the side where the periphery of polymer electrolyte membrane 63 is enclosed and held).

As in the case of Example 6, elastic body 90 is provided so as to cover the entire surface of frame 20, and bead 91 is formed in this elastic body 90. Furthermore, in Figure 30, for convenience, only polymer electrolyte membrane 63 of MEA 25 is shown, and the catalysts layers and gas diffusion electrodes are omitted.

In the present example, a glass-filled liquid-crystal polymer (VECTRA A130 made by Polyplastics Co.; modulus of elasticity: 15,000 MPa) was used as the first-color material that formed frame 20 (i.e., frames 20a and 20b), and a polyolefin elastomer (Santoprene 8101-55 made by Santoprene Japan) was used as the second-color material that formed elastic body 90. Here, the thickness of frames 20a and 20b was 0.25 mm (i.e., the thickness of frame 20 was 0.5 mm), and the reference thickness of elastic body 90 was 0.25 mm. Also, the height of bead 91 provided on both sides of elastic body 90 was 0.2 mm.

As aforementioned, inclined parts 92a and 92b were provided in frame 20a and frame 20b, respectively, and this undercutting completely prevented the peeling of elastic body 90 and frame 20 during two-color molding.

Furthermore, during molding, a technique similar to that in Example 2 was adopted, and a subrunner from the center of each manifold was used to flow to both sides, with the manifold end as the reference point. Figures 29 and 30 show the state after the unnecessary parts were removed.

In the present example, also, a 12-cell stack was constructed as in Example 1. For this 12-cell stack, the present inventor(s) and others conducted a normal cross-leak test and a threshold cross-leak test, as in Example 1.

As a result of the normal cross-leak test, the amount of gas that escaped from the cathode side was 0 ccm. Also, as a result of the threshold cross-leak test, the supply source pressure at the moment when the gas escaped from the cathode side was 322 kPa. This confirmed the high sealing efficacy in the present example, also.

### Example 8

In Example 7, as aforementioned, a glass-filled liquid-crystal polymer was adopted as the first-color material that forms frame 20, but other materials can be adopted. In Example 8, therefore, a normal cross-leak test and a threshold cross-leak test were performed also for the case where, instead of a liquid-crystal polymer, an SUS316 metal plate (thickness: 0.25 mm) was fluorocoated after being press-stamped.

As a result of the normal cross-leak test, the amount of gas that escaped from the cathode side was 0 ccm. Also, as a result of the threshold cross-leak test, the supply source pressure at the moment when the gas escaped from the cathode side was 785 kPa. This confirmed the high sealing efficacy in the present example, also.

### (Embodiment 7)

In Examples 7 and 8, in the molding of the elastic body, also, the molding temperature required for molding the selected material sometimes is within the temperature range where there is a risk of damaging the polymer electrolyte membrane. Embodiment 7 takes into consideration such a case. To be specific, the elastic body is molded in such a way that there is partial penetration or covering of the entire surface, etc., so as to extend to the front and back of the separate-piece-type frame. This pair of elastic bodies encloses and holds the periphery of the polymer electrolyte membrane, and the cell fastening force seals the separators and gaskets as well as the circumference of the polymer electrolyte membrane. Consequently, elastic bodies are disposed between a frame and a separator, between the other frame and a separator, and between one frame and the other frame. Examples of cases requiring the structure of the present embodiment include, for example, the manufacturing of a stack for cogeneration, which requires operation that is longer term than in a vehicle, and when it is desirable to select a fluoroelastomer (with a preferable mold temperature that generally exceeds 150 degrees), from the viewpoint of long-term stability of the seal material. In these cases, from the standpoint of elastic material drooping prevention, the frame material must have the highest possible mechanical strength (particularly, the modulus of elasticity), so GF (glass-filled) super engineering plastics, etc., are preferable.

Next, an example based on the present embodiment will be explained.

### Example 9

Figure 31 is the top view showing the structure of the elastic body and the frame, which is equipped with the polymer electrolyte fuel cell of Example 9 of the present invention. Also, Figure 32 is the view along line Z-Z in Figure 31, and (a) and (b) are cross-sectional views showing the procedure for manufacturing the aforementioned structure. Furthermore, in Example 9, also, each manifold, bolt hole, etc., is provided in the frame and elastic body, as in Example 1, so the same key numbers were assigned and the explanations were omitted. (For convenience, only the key number for each manifold and bolt hole formed in the frame is assigned.)

As shown in Figures 32(a) and 32(b), the frame and elastic body of the present example have a two-layer structure. That is, it is constructed by laminating elastic body 90a, which is provided so as to cover frame 20a as well as the entire surface of frame 20a, and elastic body 90b, which is provided so as to cover frame 20b as well as the entire surface of frame 20b. Beads 91a and 91b, which are like the beads formed in the frame of Embodiment 1, are formed on elastic body 90a and 90b, respectively. The periphery of polymer electrolyte membrane 63 is enclosed and held by elastic bodies 90a and 90b. Furthermore, in Figures 32(a) and 32(b), for convenience, only polymer electrolyte membrane 63 of MEA 25 is shown, and the catalyst layers and gas diffusion electrodes are omitted.

In the present example, an injection molding machine for a thermoplastic resin was used for manufacturing, by using a glass-filled liquid-crystal polymer (VECTRA B130 made by Polyplastics Co.; modulus of elasticity: 20,000 MPa) as the first-color material that formed frames 20a and 20b; and a molding machine for a thermosetting resin was used to mold a fluoroelastomer (Viton AP made by DuPont Dow Elastomers Japan; rubber hardness: 55), which was the second color (elastic bodies 90a and 90b), with these frames 20a and 20b as the insert parts. Here, the thickness of frames 20a and 20b was 0.25 mm, and the reference thickness of elastic bodies 90a and 90b was 0.25 mm (i.e., the reference thickness of elastic body 90 was 0.5 mm). Also, the height of beads 91a and 91b provided in elastic bodies 90a and 90b, respectively, was 0.2 mm.

Here, the conditions during primary vulcanization of the second color were a temperature of 170 °C and a duration of 4 minutes. Those for secondary vulcanization were a temperature of 180 °C and a duration of 8 hours. Under these temperature conditions, however, no heat-induced shape change was observed in frame 20a or 20b.

The seal material produced in this manner was used to enclose and hold the hot-pressed MEA (PRIMEA, Japan Goretex Inc.), after which this was fastened to construct a 12-cell stack, as in Example 1. For this 12-cell stack, the present inventor(s) and others conducted a normal cross-leak test and a threshold cross-leak test, as in Example 1.

As a result of the normal cross-leak test, the amount of gas that escaped from the cathode side was 0 ccm. Also, as a result of the threshold cross-leak test, the supply source pressure at the moment when the gas escaped from the cathode side was 268 kPa. This confirmed the high sealing efficacy in the present embodiment, also.

### Example 10

As the seal structure in the present embodiment, the one shown in Figures 33 and 34 also can be considered. Figure 33 is the top view showing the structure of a modified example of the frame and elastic body provided in the polymer electrolyte fuel cell of Example 10 of the present invention. Also, Figure 34 is the view along line z-z in Figure 33, and (a) and (b) are cross-sectional views showing the procedure for manufacturing the relevant structures.

As shown in Figures 33 and 34, elastic bodies 90a and 90b are covered by frames 20a and 20b, respectively. Rib 93a that projects upward through frame 20a is formed in elastic body 90a, and bead 91a is formed on this rib 93a. Similarly, rib 93b that projects downward through frame 20b is formed in elastic body 90b, and bead 91b is formed on this rib 93b.

In this modified example, a glass-filled liquid-crystal polymer (VECTRA B130 made by Polyplastics Co.; modulus of elasticity: 20,000 MPa) was used as the first-color material that formed frames 20a and 20b; and a fluoroelastomer (Viton AP made by DuPont Dow Elastomers Japan; rubber hardness: 55) was used as the second color that forms elastic bodies 90a and 90b. Here, the thickness of frames 20a and 20b was 0.25 mm, and the thickness of the sides of elastic bodies 90a and 90b that contact polymer electrolyte membrane 63 was 0.25 mm. Also, the width of ribs 93a and 93b was 2.0 mm, and the height was 0.15 mm. The height of beads 91a and 91b was 0.2 mm.

Here, the conditions during primary vulcanization of the second color were a temperature of 170 degrees and duration of 4 minutes. Those for secondary vulcanization were a temperature of 180 degrees and a duration of 8 hours. The seal material manufactured in this manner enclosed and held the hot-pressed MEA (PRIMEA, Japan Goretex Inc.), after which this was fastened to construct a 12-cell stack, as in Example 1. For this 12-cell stack, the present inventor(s) and others conducted a normal cross-leak test and a threshold cross-leak test, as in Example 1.

As a result of the normal cross-leak test, the amount of gas that escaped from the cathode side was 0 ccm. Also, as a result of the threshold cross-leak test, the supply source pressure at the moment when the gas escaped from the cathode side was 332 kPa. This confirmed the high sealing efficacy in the present embodiment, also.

In the present example, the amount of expensive fluoroelastomer used was about half of that used in Example 9, so the cost could be reduced.

The polymer electrolyte fuel cell explained in each of the aforementioned embodiments is appropriately selected according to the manufactured cell size, resin fluidity and mold shrinkage, total process cost, cell operating conditions (particularly the flow channel pressure loss and the inter-electrode differential pressure), allowable cell pitch, possible molded part thicknesses, etc.

Furthermore, in each of the aforementioned embodiments, a polymer electrolyte fuel cell is described. However, the present invention is not necessarily limited to such a polymer electrolyte fuel cell. Under development at present is a low-temperature (≤100 °C) fuel cell that operates with a material other than a polymer (e.g., glass, ceramic) as the electrolyte. Basically, as long as the temperature does not exceed the aforementioned temperature, there are suitable alternatives for both the thermoplastic frame and the elastic body, which exhibits increased compression strain at elevated temperatures. Consequently, it is possible to apply the present invention to such low-temperature fuel cells.

### Industrial Applicability

The present invention's fuel cell electrolyte membrane structure, fuel cell electrolyte membrane-electrode assembly structure, and the fuel cell equipped with this fuel cell electrolyte membrane-electrode assembly structure can reliably and easily seal between separators as well as between a separator and a fuel cell electrolyte membrane, so it is useful for high-precision polymer electrolyte fuel cells.

### List of Reference Signs

- 20: Frame
- 20a, 20b: Frames
- 21: Air manifold
- 22: Hydrogen manifold
- 23: Water manifold
- 24: Bolt hole
- 25: MEA
- 26: Opening
- 30: Anode separator
- 31: Air manifold
- 32: Hydrogen manifold
- 33: Water manifold
- 34: Bolt hole
- 35: Hydrogen flow channel
- 36: Cathode separator
- 37: Air manifold
- 38: Hydrogen manifold
- 39: Water manifold
- 40: Bolt hole
- 41: Air flow channel
- 50: Rubber sheet
- 51: Air manifold
- 52: Opening
- 53: Water manifold
- 54: Bolt hole
- 55: Rubber sheet
- 56: Opening
- 57: Hydrogen manifold
- 58: Water manifold
- 59: Bolt hole
- 61: First molded part
- 62: Second molded part
- 63: Polymer electrolyte membrane
- 64: Depression
- 70: Catalyst layer
- 71: Gas diffusion electrode
- 81: Elastic body
- 82: Groove
- 84: Groove
- 85: Elastic body
- 86: Groove
- 90: Elastic body
- 90a, 90b: Elastic bodies
- 91: Bead
- 91a, 91b: Beads
- 92a, 92b: Inclined parts
- 93a, 93b: Ribs

## Claims

1. A fuel cell sealing structure for a fuel cell having an electrolyte membrane-electrode assembly in which a fuel cell electrolyte membrane is sandwiched by a pair of electrode layers, the electrolyte membrane electrode assembly being sandwiched by a pair of separators each having a gas flow channel means,
**characterized by**
a frame means enclosing and holding the periphery of said electrolyte membrane, and
an elastic body means disposed between said frame means and at least said separators,
said frame means having a modulus of elasticity of at least 2000 MPa and at most 2,000,000 MPa, and
said elastic body means having a modulus of elasticity greater than 0 MPa and less than or equal to 200 MPa,
said frame means and said elastic body means sealing between said electrolyte membrane and at least one of said separators as well as between said pair of separators.

2. A fuel cell sealing structure according to claim 1, wherein said elastic body means is interposed between said frame means and at least one of said separators.

3. A fuel cell sealing structure according to claim 1 or 2, wherein said elastic body means is embedded in said frame means.

4. A fuel cell sealing structure according to one of claims 1 to 3, wherein said frame means and the elastic body means are integral.

5. A fuel cell sealing structure according to one of claims 1 to 4, wherein said frame means and said elastic body means are fused.

6. A fuel cell sealing structure according to one of claims 1 to 5, wherein said elastic body means covers the entire surface of said frame means.

7. A fuel cell sealing structure according to one of claims 1 to 5, wherein said elastic body means is anchored in said frame means.

8. A fuel cell sealing structure according to claim 7, wherein at least one undercut is provided in said frame means and filled with material of said elastic body.

9. A fuel cell sealing structure according to one of claims 1 to 8, wherein said separator and said elastic body means are integral.

10. A fuel cell sealing structure according to claim 1 or 2, wherein the aforementioned elastic body and the aforementioned frame are integrated.

11. A fuel cell sealing structure according to one of claims 1 to 10, wherein said elastic body means is disposed as well between the frame means and the electrolyte membrane as well.

12. A fuel cell sealing structure according to claim 11, wherein said elastic body means encloses said frame means.

13. A fuel cell sealing structure according to one of claims 1 to 12, wherein said frame means comprises two portions disposed on either side of said electrolyte membrane.

14. A fuel cell sealing structure according to one of claims 1 to 13, wherein it is incorporated in a prefabricated part for manufacturing a fuel cell.

15. A fuel cell sealing structure according to claim 14, wherein the prefabricated part is an electrolyte membrane-electrode assembly.

16. A fuel cell sealing structure according to claim 14, wherein said prefabricated part is incorporated in a fuel cell.

17. A fuel cell sealing structure according to claim 14, wherein said prefabricated part is incorporated in the fuel cells of a fuel cell stack.
